(19) Europäisches Patentamt
European Patent Office
Office européen des brevets

(11) **EP 2 182 351 A1**

(12) **EUROPEAN PATENT APPLICATION**

(43) Date of publication:
05.05.2010 Bulletin 2010/18

(51) Int Cl.:
*G01N 29/04* (2006.01)   *G01N 29/22* (2006.01)
*G01N 29/34* (2006.01)   *G01N 29/44* (2006.01)

(21) Application number: 09174236.1

(22) Date of filing: 27.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 29.10.2008 US 193117 P

(71) Applicant: NATIONAL RESEARCH COUNCIL OF
CANADA
Ottawa, Ontario K1A OR6 (CA)

(72) Inventors:
• Moreau, Andre
Quebec J3V3Y5 (CA)
• Toubal, Lotfi
Quebec G8Z 1P4 (CA)

(74) Representative: Kritzenberger, Jürgen Hermann
Zipse Habersack Kritzenberger
Patentanwälte
Hermann-Köhl-Straße 2a
93049 Regensburg (DE)

(54) **Method and apparatus for ultrasonic characterization of scale-dependent bulk material heterogeneities**

(57) Methods and apparatuses are provided for detecting and characterizing heterogeneities within a bulk material that exhibit scale-dependent uniformity represented by locally representative volume elements (LRVEs). The invention is particularly useful in the characterization of local variations of crystallographic texture of metals and alloys, including metallurgical Ti alloys. The invention consists of generating ultrasonic waves through different paths in the object, and detecting differences in time, amplitude and/or phase of the detected frequency components traveling the different paths to characterize a statistical mean dimensions of the LRVEs, for example, by autocorrelation. Mean sizes of the LRVEs in the scan directions can be computed by autocorrelation, and mean sizes in the direction of the propagation can also be approximated.

**FIG. 2**

EP 2 182 351 A1

**Description**

<u>Field of the Invention</u>

This invention relates in general to the characterization of scale-dependent uniform bulk material heterogeneities and in particular, to the determination of a statistical correlate of dimensions and orientations of these heterogeneities when the heterogeneities have different ultrasonic properties, especially in macrozones of titanium alloys, and the like.

<u>Background of the Invention</u>

Non-destructive testing (NDT) of materials to identify or characterize heterogeneities is an important part of many industries. There are many types of heterogeneities and many kinds of apparatus used for their detection. The present invention relates to bulk imaging techniques as opposed to surface imaging techniques. It is increasingly difficult to detect and characterize heterogeneities the more similar the heterogeneities are to the surrounding material, and the smaller and more numerous the heterogeneities are. Heterogeneities consisting of, for example, subtle chemical variations or phase segregations may be difficult to detect. Numerous small heterogeneities can defy characterization because of the impossibility of knowing when a change in a physical parameter of a wave passing through the material was affected by a single large heterogeneity or many small heterogeneities. By this measure, a material that consists of a patchwork of heterogeneities that are uniform within each patch but subtly different from each other can be extremely difficult to characterize.

Scale may be an important factor for understanding uniformity or heterogeneity within a bulk material. In general if properties of the bulk material are substantially invariant on the sample chosen within a unit volume, the bulk material is uniform on the scale of the unit volume. The notion of a representative volume element (RVE) is general and can be applied to various materials. It is a conceptual volume that is large enough to be statistically representative of a region of the material, but small enough that it is essentially indistinguishable from other nearby volume elements or from a somewhat larger volume element that contains the RVE, but is still within the scale of the RVE. Within a RVE, the material is said to be homogeneous. Generally materials may have different RVEs that can represent different regions. For example, a 1 mm$^3$ cubic volume element near the center of a sheet metal may contain enough grains to be a RVE because the properties of that cube are indistinguishable from the properties of other, adjacent, 1 mm$^3$ volume elements. However, a 1 mm$^3$ volume element taken near the edge of the sheet metal may be another and different RVE because it is representative of the edge of the sheet. As such, various regions represented by different RVEs may be defined within an object. While uniform bulk materials may have only one or a few RVEs, other materials are only locally homogeneous. That is a first RVE may be defined with respect to a region that is homogeneous and a second RVE may be defined with respect to an adjacent or nearby region that is also homogeneous, but which is substantially different from the first region. In such cases, the two RVEs are only locally representative, i.e. we have two RVEs. If a second RVE larger than the region loses the properties of the first RVE and has different properties, we can say that the first RVE is only locally representative.

One example of a material characterized by scale-dependent LRVEs is titanium alloy. On a scale of the order of cubic millimeters, there are structures called macrozones[i]. Within each macrozone, any statistical set of crystallites is expected to have a same mean orientation and same statistical deviations, but the orientation distribution varies between macrozones. Each macrozone will have slightly different ultrasound transmission properties. On the scale of a statistical number of macrozones the material is uniform, on the scale of macrozones the material is locally heterogeneous, on a scale finer than that of a macrozone, the material is locally homogeneous having a statistical number of crystallites, on the scale of crystallites the material is locally heterogenous, and on a scale smaller than a crystallite the material may be locally homogeneous. The accepted explanation for the macrozone structure of titanium alloys is that when the alloy is heated to temperatures above the beta phase transformation, beta grains are formed. The beta grains can be quite large, i.e. with linear dimensions (width, length) of about 1 to 10 mm. When cooled below the beta phase temperature, multiple alpha grains form within the prior beta grains. The alpha grains have crystallographic orientations related to the crystallographic orientation of the prior beta grains. Thus, throughout the region of a prior beta grain (a macrozone), the crystallographic texture is typically different from that of another macrozone. The alpha grains are often small in comparison with the beta grains, i.e. of about 10 $\mu$m in diameter. Although such heterogeneities are not commonly addressed, they can be important, for example, to fatigue properties[i,xii].

Another example of a material having scale-dependent heterogeneities that can be characterized by LRVEs can be found in some alloys. When some liquid metallic alloys solidify, dendrites form and some of the elements in solution are segregated to regions between the dendrites. At the end of the solidification process, the chemical composition can be non-uniform, with regions having relatively low concentrations of alloying elements, and other regions with higher contents in alloying elements. Because the dendrites can be quite large, it may be possible to define a LRVE within a dendrite, but this RVE may not be representative of an adjacent dendrite, or of a volume element on a larger scale or a smaller scale.

The chemical constituents of these heterogeneities vary little, and are scale-dependent but are not widely different from bulk averages, so characterizing these heterogeneities is difficult, especially because each measurement includes the compounded effect of several to many heterogeneities. Extensive research into the characterization of flaws in titanium alloys led to the discovery that macrozones interfere significantly with ultrasonic wave propagation. In U.S. Department of Transportation, Federal Aviation Administration AR-02/114[ii] several experiments are performed. A large volume of material is probed near the proximal surface using the equipment shown there, consequently it is impossible for the DOT report to have assessed the macrozones. In AIP Conference proceedings, Yu et al.[iii] present work very similar to the work on defect detection presented in [ii]. Yu et al.[iii] found that different focal conditions at the backwall leads to significantly different apparent attenuation values, and concluded that attenuation values cannot be reliably gauged using their ultrasonic setup. Similar work by Blodgett and Eylon [vi] used a laser-interferometer. Diffraction effects present in all of these references, make the ultrasound beam shape complex masking quantitative information.

US5,631,424 to Nieters et al. describes the known backscattered ultrasound technique to identify microstructural features such as planar grain boundary fronts, grain texturing and differential grain sizes. US 2007/0113655 teaches a time-of-flight image converted to an elastic moduli image using the well-known relationships between time-of-flight, thickness, sound velocity, density, and elastic moduli. US 4,083,232 teaches medical tomography using rectilinear ultrasonic transmission.

There remains a need for a NDT for estimating the dimensions of macrozones or other heterogeneities that can be described by the LRVE model.

<u>Summary of the Invention</u>

An object of this invention relates to the ultrasonic characterization of scale-dependent uniform bulk material LRVEs, and more precisely, to measuring spatial dimensions of LRVEs. To do so, spatial variations of the properties of acoustic waves having traveled narrow paths through the material are mapped. It may be accomplished in a manner that resembles the measurement of amplitude or velocity C-scans, as they are routinely done by those skilled in the art of ultrasonic NDT. In the present invention, however, two improvements are made simultaneously: 1) the ultrasonic setup is made so that a narrow beam of ultrasound, also called an ultrasound ray, is propagated in the sample such that the ultrasound beam or ray is narrower than the heterogeneities to be imaged; and 2) the spatial variation of a response time, amplitude, or phase (or quantity derived therefrom with or without other parameters measured or computed), is interpreted to characterize dimensions of the heterogeneities of the material.

A method for characterizing LRVEs comprises: selecting an ultrasonic emitter capable of generating in the sample at least one frequency component having a wavelength less than or approximately equal to an expected dimension of the LRVEs; generating the frequency component in the object and detecting the frequency component after it traverses each of a plurality of different paths through the object, where each of the plurality of paths has a transverse dimension smaller than the expected dimension of the LRVEs, and wherein a mean separation of adjacent paths is smaller than or approximately equal to the expected dimension of the LRVEs; and computing a statistically representative mean dimension of the LRVEs using a difference in time, amplitude and/or phase of the detected frequency components traveling the different paths. The different paths are substantially piece-wise linear with no substantial redirection at interfaces between LRVEs. Preferably wavelength of the at least one frequency component, the transverse dimension of the paths, and the mean separation of the adjacent paths are smaller than half the expected dimension of the LRVEs.

Computing the statistically representative mean dimension of the LRVEs may involve computing a mean dimension of the LRVEs in the direction of propagation of the path. Using the difference in time, amplitude and/or phase of the detected frequency components traveling the different paths to characterize a statistically representative mean dimension of the LRVEs may comprise computing a mean dimension of the LRVEs in a direction orthogonal to the path.

An apparatus comprises: a processor for using a difference in time, amplitude and/or phase of detected frequency components of ultrasonic signals traveling different paths through an object having heterogeneities characterized by locally representative volume elements (LRVEs), to compute a statistically representative mean dimension of the LRVEs, wherein each of the plurality of different paths through the object is substantially piece-wise linear, with no substantial redirection at interfaces between LRVEs, and has a transverse dimension smaller than or approximately equal to the expected dimension of the LRVEs, and the detected frequency components have a wavelength that is smaller than or approximately equal to the expected dimension of the LRVEs.

Further features of the invention will be described or will become apparent in the course of the following detailed description.

<u>Brief Description of the Drawings</u>

In order that the invention may be more clearly understood, embodiments thereof will now be described in detail by way of example, with reference to the accompanying drawings, in which:

FIG. 1 is a schematic cross-section of an object containing many LRVEs, through which multiple parallel paths are defined, the paths having various degrees of correlation regarding ultrasonic propagation;

FIG.2 is a schematic illustration of an immersion ultrasonic test apparatus in accordance with an embodiment of the invention;

FIG. 3 is a schematic illustration of a pulse-echo ultrasonic test apparatus in which the ultrasound source and ultrasound detector are focused on a distal surface of the object, which may be acceptable in certain applications of the invention;

FIG. 4 is a schematic illustration of a pulse-echo ultrasonic test apparatus in which the ultrasound source and ultrasound detector are focused on the front, or proximal surface of the object;

FIG. 5 is a schematic illustration of a pitch-catch ultrasonic test apparatus in which distinct ultrasound source and ultrasound detector are focused on opposites surfaces of the object;

FIG. 6 is a schematic illustration of a pulse-echo ultrasonic test apparatus in which the ultrasound source is focused a distance from the proximal surface of the object;

FIG. 7 is a schematic illustration of a pulse-echo ultrasonic test apparatus in which the focusing angle is relatively small, which causes the beam to have transverse dimensions inside the object that are substantially constant and much smaller than the dimensions of the transducer;

FIG. 8 is a schematic illustration of a pitch-catch ultrasonic test apparatus in which the ultrasound ray is obtained with a plane wave transducer on one side of the object and an aperture on the other side of the object;

FIG. 9 is a schematic illustration of a pitch-catch ultrasonic test apparatus in which the ultrasound ray is obtained with a plane wave transducer on one side of the object and a pin type transducer on the other side of the object;

FIG. 10 is a schematic illustration of a pitch-catch ultrasonic test apparatus in which apertures limit the ultrasound path through the object;

FIGs. 11 a,b are schematic illustrations of two pulse-echo ultrasonic test apparatus in which two ultrasound rays are produced simultaneously and detected with different time using immersion and contact transducers, respectively;

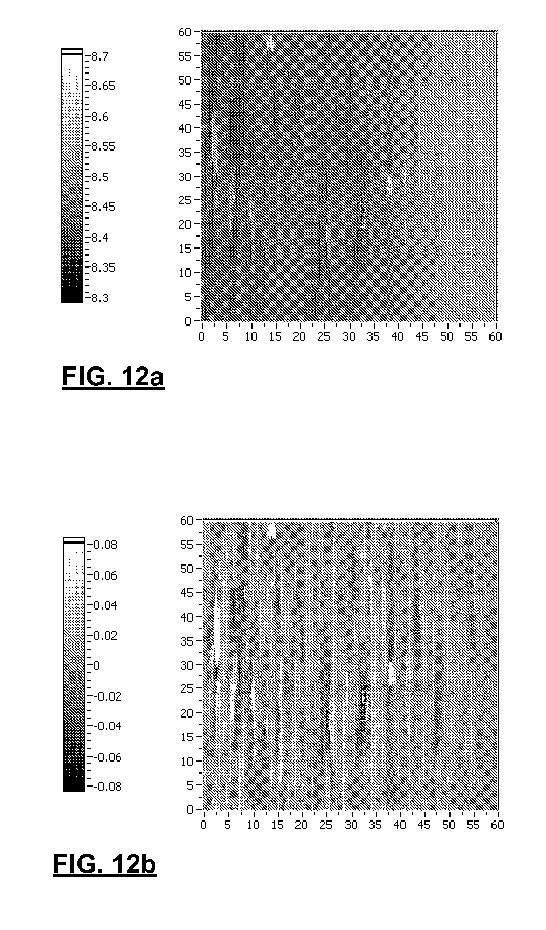

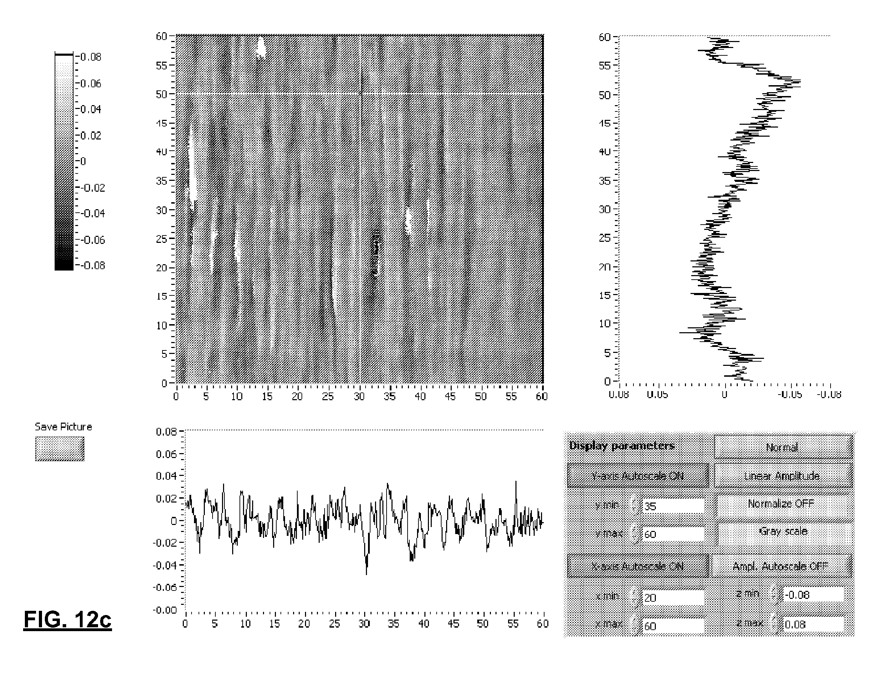

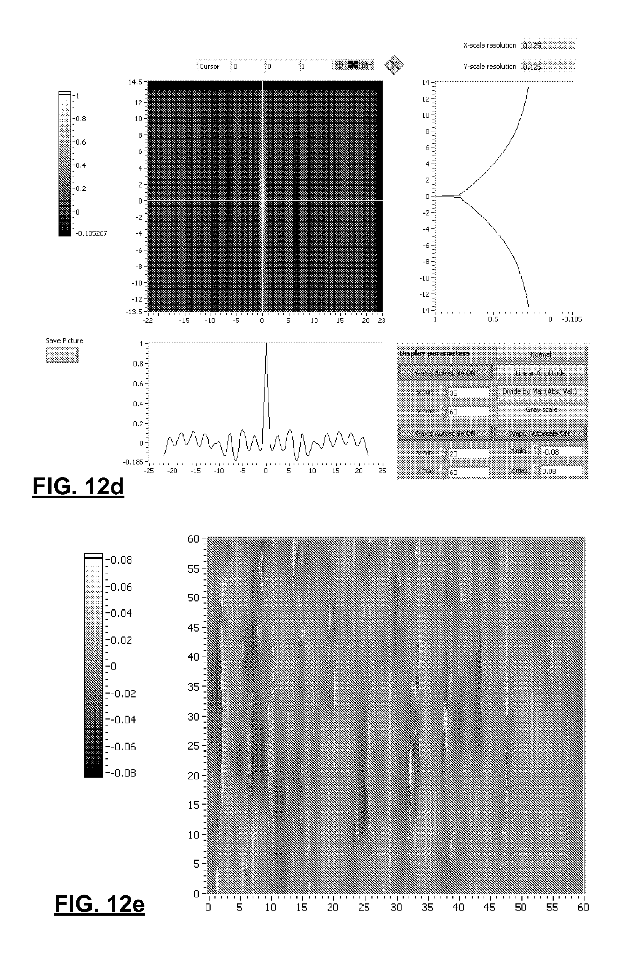

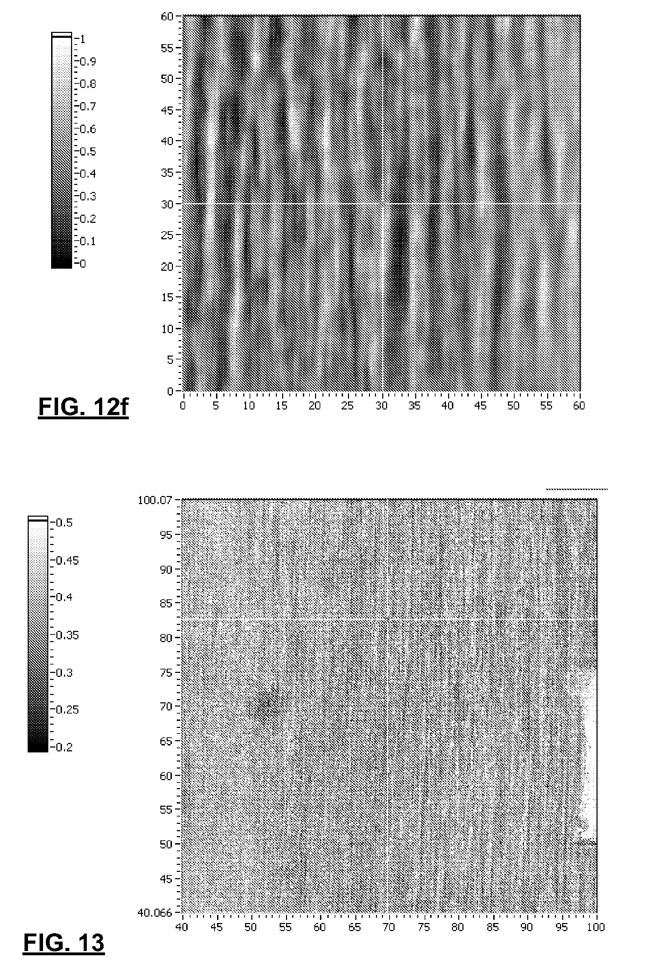

FIGs. 12a-f are images of a same titanium alloy sample scanned in accordance with the invention: FIG. 12a is a gray-scale, 2-dimensional mapping of the time delay arising from the group velocity inside a titanium alloy plate, and FIG. 12b is the same data improved by image processing, FIG. 12c shows the image of FIG. 12b as well as linear plots along specific lines, FIG. 12d shows an autocorrelation map of the image of FIG. 12b, FIG. 12e is a gray-scale, 2-dimensional mapping of a detected phase which has been converted to a phase delay, and FIG. 12f is a gray-scale, 2-dimensional mapping of a detected amplitude;

FIG. 13 is a metallographic (surface) image of the macrozones of the titanium plate used in FIGs. 12a-f;

FIG. 14 is a prior art scanned image reproduced from Reference ii;

FIGs. 15a-c are gray-scale, 2-dimensional images of the sample used in FIGs. 12a-f: FIG. 15a shows an amplitude map obtained using the experimental setup of Reference ii, FIG. 15b shows the amplitude map improved with some image processing, and FIG. 15c shows the propagation delay as improved with some image processing;

FIG. 16 is a graph showing the variance of the propagation delay through twice the plate thickness in a pitch-catch configuration vs. plate thickness;

FIGs. 17a-c are respectively gray-scale, 2-dimensional mappings of the propagation delay, and amplitudes inside a forged piece of titanium alloy, and a metallographic surface image of the same;

FIGs 17d-f are gray-scale autocorrelation maps of produced by analyzing respective portions of the image of FIG 17a;

FIGs. 18a-c are a photographic image of a cylinder of titanium alloy, a schematic ultrasonic setup used for ultrasonic scanning, and a radial volumetric scan of the propagation delay, produced in accordance with an embodiment of the invention;

FIG. 19a is a photographic image of a forged titanium alloy block having a complex shape as well as various gray-scale, 2-dimensional mappings of the propagation delays obtained from selected areas; and

FIGs. 19b-e are gray-scale autocorrelation maps produced by analyzing respective portions of the image of FIG. 19a.

Detailed Description

The present invention is directed to the detection and characterization of heterogeneities that exhibit scale-dependent uniformity within a bulk material object. The method involves using known ultrasonic equipment and their equivalents to produce amplitude and/or time-based detection of ultrasounds having traversed the object at a plurality of paths through the object to produce a scan of the object, where the ultrasound source and detector and their configuration are chosen so that for each measurement, at least one frequency component of the ultrasound signal is limited to a path through the material that is narrower than the locally representative volume element (LRVE) to be imaged. The paths extend from source locations on the object to detection locations on the object (preferrably surface but also possibly subsurface locations) and are only substantially redirected only at boundaries of the object. While minute changes may occur at LRVE interfaces within the bulk material of the object, these are not substantial redirections, like those observed at ultrasonic reflection points in the path. Such ultrasonic reflection points are not necessarily present in a path (e.g. in pitch catch configurations). The adjacent paths are sampled with a sufficient density to statistically discern an expected mean LRVE. Then, the scan can be analyzed to identify a statistical indicator of the dimensions of the LRVEs.

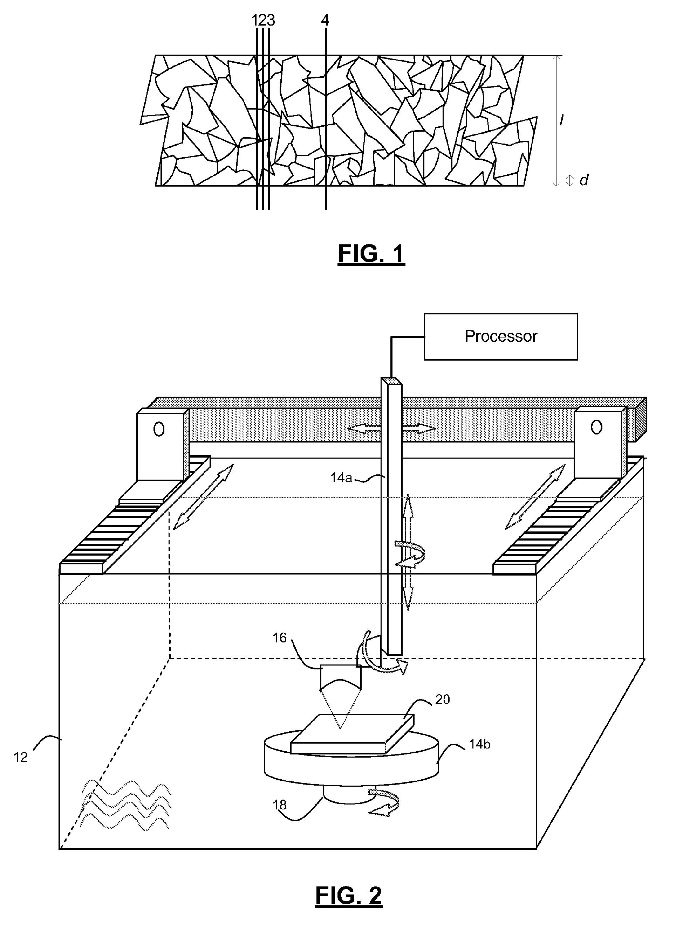

FIG. 1 is a schematic illustration of a cross-section of a simple example of such an object. The bulk material of the object has LRVEs enclosed within the solid lines, but the ultrasonic transmission properties differ from one LRVE to the next. The object has parallel, planar, top and bottom surfaces. The lines labeled 1-4 represent paths through the material. The length of each path is constant and equal to the thickness of the sheet ($l$). A normalized mean dimension of the LRVEs in the direction between the top and bottom surfaces is about 1/9th the thickness of the sheet. Accordingly, on average, a path passing through material partitioned this way encounters about 9 (6-14 in the illustrated image) LRVEs. Paths 1, 2, 3 and 4 are shown as illustrative examples, and it will be appreciated that a number and spacing of the paths can vary, and further that substantially the whole image (or a single scan line) will typically be covered by these paths to produce a representative image (or a linear scan).

Rays 1, 2, 3, represent neighbouring paths that are (to some extent) correlated to each other, though effectively uncorrelated to ray 4. For rays that are near enough to each other so that there is only a slight difference in distances traveled through mostly the same LRVEs, the propagation delay should be substantially the same. At the same time, rays that are sufficiently separated so that substantially none of the same LRVEs are encountered, will be uncorrelated. Clearly, the acoustic propagation characteristics will be similar for rays 1 and 2; they will differ somewhat more between line 1 and line 3; and they will be effectively uncorrelated between line 1 and line 4. It will be appreciated that correlated or uncorrelated is a relative measure that depends on the sample, the dimensions of the LRVEs, and the distance between the lines. Therefore, for a given sample, and for separation distances between the lines that are sufficiently small, the spatial correlation of the measurements can be used to obtain information about the dimension of the LRVE in the directions perpendicular to the ultrasound propagation direction.

The mechanism for detection is based on the assumption that LRVEs generally have different acoustic properties, for example resulting in a variation of a response time, amplitude, or phase (or a quantity derived therefrom with or without other parameters measured or computed). For example, chemical or phase segregation may cause heterogeneities in density and sound velocity, which in turn affect the acoustic impedance, $Z = \rho c$, where $Z$ is acoustic impedance, $\rho$ is material density, and c is sound velocity. Another example is that of macrozones in titanium wherein the crystallographic texture of a macrozone is different from the texture of another macrozone. Changes in crystallographic texture are known to affect sound velocity [vii].

Once a path-dependent quantity has been selected for producing spatial contrast, a 1-dimensional or a 2-dimensional surface scan, for example, may be performed in any convenient coordinate system. Such a scan may be represented, in particular, as a graph or an image. It is known in the art of signal processing and image processing to use various techniques to enhance the features that are of interest. Some of the more obvious image processing techniques include changing the brightness or contrast of the image, as well as spatial filtering. These can be applied to the data obtained from the surface scan.

Ultrasound propagation can be described using various models or approximations. In some cases, it is convenient to use the ray-tracing approximation, which assumes that ultrasound propagate in straight lines, except at boundaries between two materials of dissimilar properties, where they can be reflected and/or refracted. In other cases, the wave nature of ultrasound is modeled in detail, to account for scattering and diffraction. To describe the invention, it is perhaps easiest to use the ray tracing approximation. The effect of the wave nature of ultrasound will be discussed later.

The ray tracing approximation of ultrasound propagation applies when a beam propagates along a prescribed, narrow, path through an object. This path is considered rectilinear except when it meets a boundary between two materials of dissimilar materials, at which point it is reflected or refracted. Therefore, in the ray tracing approximation, ultrasound propagates along a path that is a succession of linear segments. Also, it is assumed that the ultrasonic ray has zero transverse dimensions. In practice, however, the finite size of the emitter and of the receiver will determine the effective width of the ray. The ray tracing approximation is usually quite good when the dimensions of the object and, in the context of this invention, when the dimensions of the heterogeneities or LRVE are large compared to the acoustic wavelength, or when different LRVE have very small differences in acoustic properties.

An ultrasonic wave produced by an ultrasonic emitter will be detected with a propagation delay and an amplitude that depend on the location of the emitter, the location of the detector, the size and shape of the object, an amplitude and frequency of the emitted ultrasonic waves, and on properties of the material through which the sound ray propagated. Ultrasonic waves following a narrow path from a source location to a detection location in an object containing bulk material heterogeneities that can be described using the concept of a LRVE, have propagation delays and amplitudes that are representative of the narrow path through the medium.

By taking multiple measurements of ultrasonic rays from different small source and small detection locations on the object, a map of the paths corresponding to the source and detection locations can be produced. Each measurement represents a comparative property of net propagation along the respective path. Naturally a single path between each pair of source and detection locations is preferable. If there are multiple paths and their contributions cannot be separated (for example, in time), then multiple signals will tend to interfere with each other at the detection point, thus possibly rendering the measurement unusable.

For example, if the paths are all parallel and substantially uniformly spaced, the map may be a Cartesian 2-dimensional representation of the projection of the paths through the object. This may be done, for example, if the object is bounded by two parallel planes (like the object shown in FIG. 1), and detection is provided at opposite sides (pitch-catch configuration), or by reflection from the back wall with detection provided by the same point as the excitation (pulse echo configuration).

By taking multiple measurements, each representative of different narrow paths through the object, where these paths are narrower and closer together (on average) than the expected size of the LRVEs, comparison of a sufficiently large number of these path specific measurements provides a representative measure of the mean size of the LRVEs.

As noted above, the amplitude of the measured frequency component sent along a single path is a function of the amplitude of the generated ultrasonic wave, as well as attenuation within the LRVEs, and losses at the interfaces between different LRVEs. As the number of interfaces and of the specific LRVEs vary with the path, changes in amplitude of adjacent paths indicate differences in the constitution of the paths. As such, statistical measurements on these differences can be used to provide a reliable estimate of the mean size of the LRVEs in a direction of the scanning, or in the two dimensions perpendicular to the path.

Also, propagation delay of the measured frequency component sent along a single path is a function of the ultrasonic propagation velocities of the frequency component in the LRVEs on the path. As the specific LRVEs vary with the path, changes in delay time of adjacent paths indicate differences in the LRVE constitution of the paths. As such, statistical measurements on these differences can be used to provide a reliable estimate of the mean size of the LRVEs.

If amplitude or propagation delay measurements are used and the paths are not of common length, normalization of the measurements may be required to provide sound comparisons of adjacent path measurements. If the ultrasonic source does not induce the frequency component having a sufficiently constant amplitude, and it is the amplitude that is being measured, correction for emitter variation may be required, especially if the variations are within the same frequency range as the detected signal.

Instead of using the propagation delay or the amplitude of a frequency component, other quantities derived from the two quantities can be used. For example, the phase of the measured frequency component is a result of the time delays divided by the period (inverse of the frequency) of the frequency component in the LRVE, as is well known in the art. Phase (and amplitude) can also be obtained using Fourier transform techniques. Other quantities, such as mean ultrasonic velocity, which is inversely proportional to the delay time, can also be used for characterization of the size of the LRVEs. A mean ultrasonic velocity can be computed from the length of the path divided by the propagation delay, as is well known in the art. Many systems are designed to compute the path length from multiple echo intervals, for example, or from a prior characterization of the object.

As such, measures that depend on the time, amplitude or phase of the frequency component serve to qualify the material through the path. Depending on the ultrasonic propagation parameters, a difference between the ultrasonic velocities, or the attenuations of the different LRVEs may be greater, easier to compute, present a higher signal-to-noise ratio, or present some other advantage, suggesting different measures would be more illustrative. Alternatively multiple measures may be used and they may be independently processed to obtain different measures, or may be combined to achieve greater accuracy.

Herein an ultrasonic measurement related to a path may be a single value or a compound measurement. It is well known in the art that by averaging multiple measurements a signal-to-noise ratio of the measurement can be increased. The combination of a plurality of measures and or measurements derived from one or more measure can be used to characterize a path for present purposes. Further it will be appreciated that different techniques for canceling noise, smoothing data, filtering data, etc. can be used and may suggest themselves in relation to particular embodiments of the invention.

If we consider different source and detection locations and, therefore, different paths, then the propagation delay may be different because the path may have a different length, but also because the material along the path may be different. If the microstructure of the material is made up of LRVEs that have mean dimensions $d$ in a direction of the paths, and if the path length is fixed and equal to $l_p$, then along the path, the ultrasound will encounter a number of LRVEs, $n$, approximately equal to $l_p/d$.

The propagation delay of a detected frequency component of an ultrasonic wave following these paths will be the sum of the propagation delays in each LRVE. If the ultrasound velocity varies between LRVEs, the total propagation delay will also vary depending on which LRVEs (and which distances) the ultrasound ray traversed. Therefore, there will be fluctuations in propagation delay times as the path is changed even if the path length, $l$, is constant.

On average, a degree of the fluctuations of the propagation delays depends on the distributions of velocities of the LRVEs of which the object is composed, as well as the dimensions of the LRVEs. The dimensions impact on the number of LRVEs encountered (n). If the path traverses more LRVEs of smaller dimensions, there will be a larger number of smaller random propagation delay differences. The total delay will fluctuate less when there are many small LRVEs with smaller propagation velocity differences, than if there are fewer LRVEs with larger propagation velocity differences. Therefore, delay fluctuations can be used to estimate the average number of LRVEs along the ultrasonic ray, permitting a measure of the mean extent of the LRVEs in the direction of the rays, (in addition to the measure of their extent in the directions perpendicular to that of the rays as described above).

It is also noted that as the number of LRVEs $n$ grows, for a given material with a given distribution of ultrasonic propagation properties of LRVEs, eventually the delay fluctuations will statistically cancel, resulting in variances along neighbouring paths that lie below a noise floor of the signal. The specific value of $n$ at which a given path thickness, and path density cannot reliably resolve a statistical mean dimension of the LRVEs for a given distribution of the LRVEs size and propagation parameters is not easily computed and depends on the characteristics of the ultrasonic equipment and experimental configuration. In general empirical verification is preferred. For example, useful information about the reliability of the measure may be determined by comparison of different scans, using a different raster path, slight angular differences, different frequency components, different sides of the sample, or different samples having similar properties.

These intuitive arguments can be formalized as follows. Assume that a plate of thickness $l$ contains macrozones of characteristic dimension $d$ in the thickness direction. The mean propagation delay, $t$, of ultrasound through the plate thickness, times the effective, or average sound velocity in the thickness direction $c$ is the thickness ($t \times c = l$). Because the macrozones are textured, the velocity varies from one macrozone to the next. Therefore, the propagation delay fluctuates also. Let $t_0$ be the expected time delay, $\langle t \rangle$, and let $t = t_0 + \Delta t$. Then,

$$\Delta t = -\frac{l}{c_0^2} \Delta c \, ,$$

where $c_0 = \langle c \rangle$. A practical way to measure $\Delta t$ is to calculate the root mean square fluctuations in the propagation delay,

$$\Delta t = \sqrt{\left\langle t^2 \right\rangle - \left\langle t \right\rangle^2} = \sqrt{\left\langle t^2 \right\rangle - t_o^2} = \sigma_t \, ,$$

where the equality $\Delta t = \sigma_t$ helps us remember that $\Delta t$ has the meaning of a standard deviation. Now, what is the quantity $\Delta c$? It is the difference from the mean of the sound velocity due to the difference in the LRVE components of the paths. As a starting point, one could estimate the fluctuations of the sound velocity due to a random distribution of single crystal orientations. This was done numerically by a Monte Carlo simulation of $10^6$ grains using the following single crystal elastic constants, and density for titanium: $c_{11}$ = 162.4 GPa, $c_{12}$ = 92.0 GPa, $c_{13}$ = 69.0 GPa, $c_{33}$ = 180.7 GPa, $c_{44}$ = 46.7 GPa, and $\mu$ = 4506.3 kg/m$^3$. The result was $c_0 = \langle c \rangle$ = 6071.5 m/s and the root mean square fluctuation, i.e. the standard deviation, $\sigma_c$ = 89.7 m/s. This standard deviation is not equal to $\Delta c$. The quantity $\Delta c$ is the fluctuation about the mean velocity through the thickness of the plate while $\sigma_c$ is the fluctuation of the velocity from grain to grain. In other words, $\Delta c$ is the standard error on the velocity. Therefore,

$$\Delta c = \frac{\sqrt{\left\langle c^2 \right\rangle - \left\langle c \right\rangle^2}}{\sqrt{n}} = \frac{\sqrt{\left\langle c^2 \right\rangle - c_0^2}}{\sqrt{n}} = \frac{\sigma_c}{\sqrt{n}}$$

if $c_o$ is known *a priori*, or

$$\Delta c = \frac{\sigma_c}{\sqrt{n-1}}$$

if $c_0$ is estimated experimentally. In these equations, $n$ is the expected number of grains in the thickness of the plate. Assuming that $n = l/d$, where $d$ is the characteristic dimension of the macrozones in the propagation direction (the meaning of $d$ will be discussed later), and assuming $c_0$ is estimated experimentally, then:

$$\Delta c = \pm\sigma_c\sqrt{\frac{d}{l-d}} \approx \pm\sigma_c\sqrt{\frac{d}{l}}.$$

The approximate equality is valid if the plate thickness is much larger than the macrozone dimension, i.e. $l >> d$. Combining these equations, we obtain an equation for pitch-catch measurement:

$$\sigma_t = -\frac{l}{c_o^2}\Delta c = \frac{\sigma_c\sqrt{ld}}{c_o^2}$$

Given that the thickness $l$ of the plate is usually known, then the macrozone size in the direction of propagation, $d$, can be obtained from a measurement of the mean delay (mean velocity) and the standard deviation of the delay fluctuations, $\sigma_t$. Also, this equation shows that the delay fluctuations increase as the square root of thickness. Stated differently, $d$ is proportional to the slope of a graph of $(\sigma_t)^2$ vs. $l$.

The proposed method considers a single pass through the thickness of a plate; i.e. it corresponds to the through-transmission experimental configuration. In the pulse-echo experimental configuration, the sound beam travels twice the thickness, and the return path is superimposed on the away path. This means that the microstructure encountered is exactly the same on the two paths. Therefore, if $l$ is to retain the meaning of being the plate thickness, and because the delay fluctuations are the same of the away and return paths, $\sigma_t$ must be computed from a measurement of half of the round trip delays. The end result is that, for a round trip measurement,

$$\sigma_t = \frac{2\sigma_c\sqrt{ld}}{c_o^2}$$

where $\sigma_t$ retains the meaning of being the standard deviation of the measured (round trip) delay fluctuations. For titanium with isotropic texture, using the above values of $c_0$ = 6.0715 mm/$\mu$s and $\sigma_c$ = 0.0897 mm/$\mu$s, this reduces to:

$$\sigma_t = 4.867 \times 10^{-3}\sqrt{ld}$$

for the pulse-echo measurement, where distances are measured in mm and times are measured in $\mu$s.

The ray tracing approximation was introduced to simplify presentation of the invention. The ray tracing approximation is valid when the dimensions of the LRVE are much larger (e.g. by a factor of more than 10) than the acoustic wavelength. The ray tracing is often inadequate to describe engineering materials probed at ultrasonic frequencies in the MHz region. For example, the acoustic wavelength at 10 MHz in metals is usually near 0.6 mm. The dimensions of macrozones in titanium are typically millimetric. When the ray tracing approximation is not valid, complex phenomena occur, such as diffraction and scattering. If the ultrasonic wavelength and the dimensions of the zones are comparable, as for the above example of metals at 10 MHz, then the ray tracing approximation may still be helpful if we assume that diffraction and scattering phenomena cause a slight deviation of the ultrasonic path, as if the ray could be bent somewhat in each zone. Alternatively one may use a model of the ultrasound propagation using the phase screen approximation whereby the ultrasound is assumed to propagate in straight line, as per the ray tracing approximation, but it acquires a phase shift as it propagates in different regions having slightly different velocities. The observed fluctuations in propagation delay and amplitude are then modeled as interference effects. Therefore, although complications arise, it is still possible to measure the statistical mean dimensions of the LRVEs from measurements of ultrasonic delays or amplitudes.

When the ultrasonic wavelength is larger than the dimensions of the heterogeneities, i.e. when the ultrasonic wavelength is comparable to a RVE that is large enough to enclose a large enough number of LRVEs, then the material appears homogeneous to the ultrasound. As a result, heterogeneities can no longer be detected. Therefore, a necessary condition for measuring the dimensions of LRVEs using this invention is that the acoustic wavelength be substantially equal to (within approximately one order of magnitude of) or, preferably, smaller than, the dimensions of the LRVEs to be characterized. As ultrasonic signals have some bandwidth, it is only necessary that at least one frequency component (i.e. that which is measured) that meets this criterion. Other frequency components can be discarded by various physical or numerical techniques known to those skilled in the art of ultrasonics.

A first configuration of ultrasonic equipment measures an ultrasonic signal having traversed an identifiable path (a path may include a succession of rays reflected or refracted at various material boundaries) through the object. This condition is satisfied, in particular, when the ultrasound source and detector diameters are small compared to the dimensions of the LRVEs. It is also satisfied when the source generates an acoustic plane wave (of lateral dimensions which can be much larger than the dimensions of the heterogeneities) and the detector is small compared to the dimensions of the heterogeneities. Using the principle of time inversion, the previous condition is equivalent to having a small source and a plane wave detector.

It is also within the skill of those versed in the art to incorporate various apertures, reflectors, and lenses, or to use interference techniques to produce a focused or planar excitation and/or detection, in order to set up an experimental arrangement such that the ultrasound travels along an identifiable ray or path inside the object.

Moreover, the ray or path need not be unique. It is sufficient that the two or more paths can be resolved to provide a basis for statistical comparison. If there are two or more paths, it may be possible to select one, for example, by gating (i.e. by selecting an inclusive time interval) the received signal. In practical applications, two of the simplest configurations are the use of a small source and a small detector in a pitch-catch configuration (direct path) or in a pulse-echo configuration. In the latter case, the ultrasound source and detector are usually (but not necessarily) a single transducer, and the path consists of two superimposed rays in which the ultrasound propagates in opposite directions.

FIG. 2 schematically illustrates an ultrasonic setup 10 used in testing forged titanium parts, for example, prior to milling or shaping, to characterize the macrozones. Ultrasonic setup 10 includes an ultrasonic bath 12 for NDT applications, equipped with a motion platform 14 for a two-way ultrasonic immersion transducer 16 and a support 18 for an object 20 to be inspected, such as those that are well known in the art and commercially available.

The illustrated object 20 may be a titanium alloy plate machined from a titanium billet and having parallel planar top and bottom surfaces. The plate is held horizontally on a sample holder at the bottom of the bath 12. The motion platform 14 has an arm on which the ultrasonic immersion transducer 16 is mounted. The transducer 16 is selected to emit an ultrasonic wave having a frequency component inside the plate that has a wavelength comparable to or smaller than the size of the macrozones to be measured. The selected transducer 16 generates the ultrasound at a spot/volume on the plate that is of a size that is comparable to or smaller than the size of the macrozones to be inspected. The ultrasonic measurements using the specific arrangement shown are made at each location intermittently between motion intervals that step the transducer 16 along a pre-determined grid with respect to the object 20. Of course continuous motion can alternatively be used.

In the example described above, the transducer 16 was mounted on an arm of the motion platform 14a and scans the surface on a square grid. Many scanning patterns involving the relative motion of the object and the transducer may be used, including translating, pivoting or rotating the object and leaving the transducer in a fixed location, for example. Other movements such as tilting or rotating the object, can provide different paths through the material and may be preferred for parts of some shapes.

Moreover, the relative motion need not be physical. For example, a phased array transducer may be used to scan the ultrasound source or detector or both using what is known as beam steering. The phased array may also be used to focus the beam onto a small area and thus contribute to selecting a well-defined ultrasound ray. Such techniques are well-known to those skilled in the art of using phased array transducers, for example, as taught in Reference [viii], the entire contents of which are enclosed herein by reference.

The output of the transducer is communicated to a processor which, typically digitizes and stores the data (such as complete A-scans or derived quantities such as amplitude, delay or phase, or some derivative value) for a plurality of the paths. The processor may also perform processing. The data may be represented as a map or otherwise as a set of points.

While the authors of this invention have demonstrated that the visual comparison method, a modified mean linear intercept method well known in the art, and the autocorrelation method are useful in estimating macrozone dimensions, other spatial features such as periodicity may be estimated, and other methods of analysis are possible. For example, there are many commercial software programs and applications for image processing, shape analysis, and statistical analyses of various features of images. One can also use Fourier transforms or wavelet transforms of the image and characterize peaks in the spatial frequency spectrum.

Although the ultrasonic data has been illustrated using images based on grids with regularly spaced steps, this is not a requirement. There exist methods for obtaining Fourier transforms or autocorrelations with a random spatial distribution of measurement points. Characteristic dimensions can be obtained using various known methods as information sufficient to characterize the LRVEs is represented by data sets (continuous as in the maps shown, or random or otherwise sampled in other cases). Estimating the statistically representative mean dimension of the LRVEs may involve computing a mean linear intercept, or performing shape analysis on a map of the time, amplitude or phase values, or computing an autocorrelation, or a frequency transform of a set of the time, amplitude or phase values.

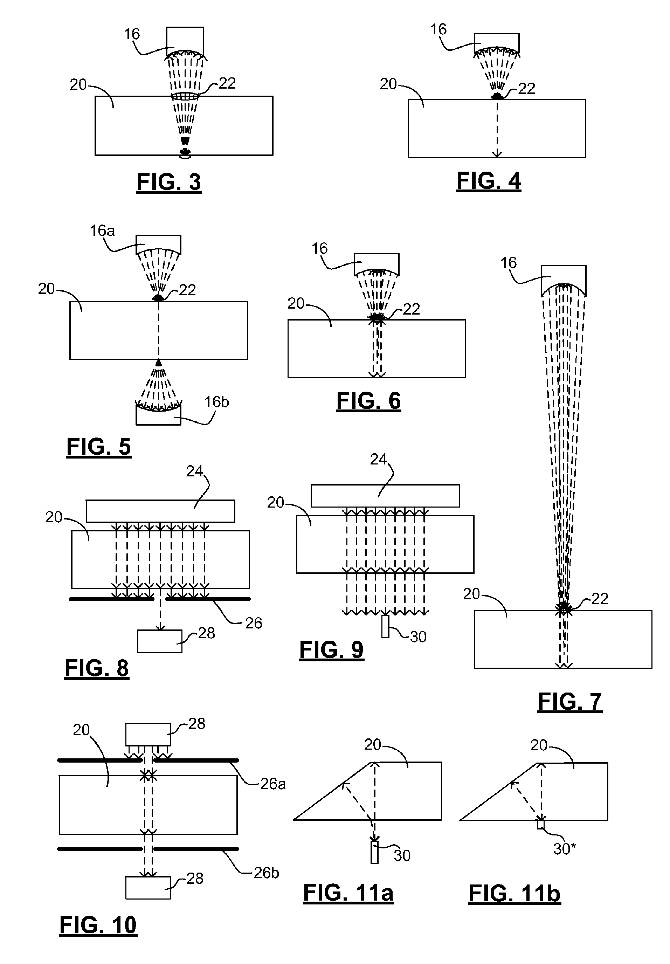

FIGs. 3-11 are schematic illustrations of configurations for achieving ultrasonic measurements along paths having transverse dimensions smaller than an expected dimension of the LRVEs. An ultrasonic path of lateral dimensions smaller than the LRVEs can be produced, for example, if both the source and the detection area or volume are small compared to the dimensions of the material LRVEs.

It is well-known to those knowledgeable in the arts of ultrasonics that the ultrasonic wavefront at a certain time may be considered as a new source. For example, when an acoustic beam is focused in water onto the surface of a plate, then the focal point at the surface of the plate is like a new source of small dimensions at the plate surface. Moreover, if an acoustic beam is focused inside a plate, the focal point of the beam can be considered as a new source. Therefore, a simple ray can be defined as a straight line passing between any two focal points. However, it must be noted that the ray extends beyond the focal points.

FIG. 3 is a schematic illustration of an ultrasonic set up that may be used in the invention. The embodiment consists of a two-way focused ultrasonic transducer 16 (pulse echo configuration) arranged to focus an emitted ultrasonic beam on the back surface of the part 20. While it is, for practical purposes, of a similar arrangement as that used by prior art, the broadest cross-section of the cone where the ultrasonic beam is concentrated, i.e. the source area or volume of the object where the ultrasonic beam is emitted 22 (or detected in this case), is smaller than the dimensions of the LRVEs to be measured. In contrast, at the narrowest point in the prior art (on the back wall) the beams were focused to 0.69 mm, and the diameter of the area 22 was 3.6 mm. Accordingly the measurement was an interfering superposition of many paths having different LRVE constitutions (as the macrozones are smaller than 3.6 mm).

This embodiment may be difficult to produce given the requirements for focusing and the requirements for maintaining the narrow path through the part 20. In particular, the diameter of the area 22 is proportional to the thickness of the plate 20. Therefore, although this embodiment may be practical for thin plates, it is certainly not well adapted to thicker plates. Accordingly it may be preferred to use either the ray approximation techniques exemplified in FIGs. 4,5,10, or the near field approximation techniques exemplified in FIGs. 8,9.

FIG. 4 is a pulse echo configuration ultrasound setup where the two-way focused transducer 16 is set to most narrowly confine the beam on the near surface of the part 20. As such the source area or volume 22 is constrained so that it is smaller than the LRVE to be investigated. It will be appreciated that practically speaking the source area or volume 22 is generally produced as a central circular/cylindrical region with annular/hollow cylindrical regions of lower amplitude and energy density concentrically around the central circular/cylindrical point, and there are different ways of characterizing the spatial confinement of such an interface. In this configuration the majority of the emitted ultrasonic beam transmitted through the part 20 and reflected from the back wall comes from a back wall area of similar dimension as, and in a position opposite to, the source area or volume 22. Other parts of the beam are principally reflected at the back wall with an angle that directs the energy away from the source area or volume 22. The structure within a cylinder defined between the source area or volume 22 and the back wall area constitutes the sampled part of the object. The round trip propagation to and from the back wall in opposite directions constitutes a path. On the ray tracing approximation this is taken to be a line having negligible width and accordingly no effective interference effects are present, and the information about the object within the path is averaged.

FIG. 5 schematically illustrates an equivalent setup to that of FIG. 4 but using a pitch-catch configuration rather than the pulse-echo configuration. Accordingly the two-way focused transducer 16 is replaced with separate emitter transducer 16a and detector transducer 16b. Pitch-catch embodiments may be preferred for thicker parts, or higher attenuation materials.

FIGs. 6 and 7 schematically illustrate embodiments where the ray tracing approximation is not accurate, but a cylinder to which the vast majority of the detected frequency component of the ultrasonic beam is confined, has a narrow cross-section, in comparison with the dimensions of the LRVEs. The small amount of interference within the beam is tolerated. It will be appreciated that an intrinsic width of the beam and an imperfect focusing of the beam may result in some degree of broadening of the source area or volume 22. Furthermore, in some applications a smaller source is not preferred, as less energy is generally provided by smaller sources, and a minimum signal strength is required for measurement. The configuration of FIG. 6 is also amenable to treatment as a ray tracing method if a subsurface focal point of the focused transducer within the part 20 is treated as a point source. This focal point can readily be computed taking the refraction of the ultrasonic beam at the source area or volume 22 into consideration.

The pulse-echo configuration of FIG. 6, like that of FIG. 4, could equally be implemented with pitch-catch configurations by replacing the one two-way transducer by two separate transducers, one for emitting and one for detecting the ultrasound.

FIGs. 8 and 9 schematically illustrate two embodiments of near-field techniques for emitting a substantially planar ultrasonic wave through the part 20. Accordingly the ultrasonic emitter consists of a large, substantially non-focused emitter 24 that is situated proximate the part 20. In the near-field of the transducer the ultrasonic wave travels through the part 20 as a planar wavefront. The spatial selection of the part of the wavefront used for measurement is provided by an aperture 26 with an unfocused transducer 28 in FIG. 8, and by use of a pin transducer 30 in the embodiment of FIG. 9. In addition, by use of the principle of time inversion, the embodiments of FIGs. 8 and 9 would also function according to the principles of the present invention if the ultrasonic emitter 24 were used as an ultrasonic receiver, and the ultrasonic receiver 28 or 30 were used as ultrasonic emitters.

Other embodiments are equally possible, including apparatuses where the aperture 26 is positioned intermediate the emitter 24, and the part 20. However, this arrangement effectively transforms the plane wave transducer 24 into a small, unfocused, transmitting transducer behaving as a small source area 22. FIG. 10 is a schematic illustration of an ultrasonic setup using unfocused transducers 28 with corresponding apertures 26a,b to narrow a transverse dimension of the emitted and detected beams.

One advantage of using the near field technique is that multiple or many measurements may be taken simultaneously respecting different parallel paths. One way to implement this technique would be by used of a planar array of transducers, such as a phased array transducer. All the elements of the array would be excited simultaneously to emit a plane wave while each element would then be read separately to provide a response for a specific path.

Clearly, numerous other arrangements are possible, involving reflectors, refractors, lenses, diaphragms, transducers of various sizes and focusing abilities, or other ultrasonic components, to define an acoustic ray. Other examples include phased array transducers, and paths through objects with multiple internal reflections inside the object to be inspected. Such configurations may be suggested by the shape of the object and/or the equipment used.

Specific measurement setups may yield more than one ultrasound ray measurement for a given excitation. For example, in FIGs. 11a,b a small transducer 28 is used to both generate and detect ultrasound on the surface of a part 20. Clearly, two different paths are possible, corresponding to reflections on two different surfaces. Often, as in the case illustrated in FIG. 11a,b, the two paths have different lengths. Therefore, the two echoes will arrive at different times and can be analyzed separately, by respective time gating. In the example shown in FIG. 11a the divergence of the unfocused pin-transducer 30 permits the paths through the object 20 to be distinct at all points.

While the foregoing examples illustrate an immersion ultrasonic technique that has certain advantages, one of which is the widespread availability of ultrasonic immersion systems, it will be appreciated that other techniques could equally be deployed, including water jet systems, direct contact transduction, mechanical tapping, or optical generation and/or detection of the ultrasound, also called laser-ultrasound. Known laser-ultrasound setups include a pulsed laser for emitting the ultrasound and a laser interferometer for detection. ElectroMagnetic Accoustic Transducers (EMATs), however, are not as well suited to the present invention to the extent that they emit and detect ultrasound over larger surfaces or volumes. Nevertheless, there could be situations where this larger surface or volume is smaller than the dimensions of the heterogeneities of interest, or where it could be used to emit or detect an effective plane wave and an aperture or a pin transducer is used for detection.

An apparatus according to FIG.2 was used to demonstrate the present invention. Specifically, a 10 MHz transducer of half-inch (12.7 mm) diameter, d, with a focal length, *f*, of 1.25 inch (32 mm) was used (i.e. F/2.5). In titanium alloys, the acoustic wavelength of 10 MHz ultrasound is approximately $\lambda = 0.6$ mm. Therefore, we expect to be able to measure heterogeneities having a dimension in the imaging plane that is larger than several tenths of a millimeter. In water, the acoustic wavelength at 10 MHz is approximately 0.15 mm. For the transducer specified above, the spot size at the focal point (beam diameter at half maximum amplitude), BD, is given by:

$$BD = 0.51\frac{\lambda}{\tan\theta_0} = 0.51\frac{f\lambda}{d}$$

and is equal to 0.19 mm. Therefore, this too should allow the measurement of material heterogeneities of dimensions equal to or larger than a few tenths of a millimeter.

The transducer is positioned directly above the part, which is a titanium plate. The plate was positioned with its proximal surface perpendicular to the axis of symmetry of the focused ultrasonic transducer. The titanium plate was cut from a billet of IMI 834, a near-alpha titanium alloy, and had a thickness of 25 mm and dimensions of 100 mm by 150 mm. IMI 834 consists of: Ti with 5.8%Al, 4%Sn, 3.5%Zr, 0.7%Nb, 0.5%Mo, and 0.3%Si. This Ti alloy is designed for use in compressors of turbine engines.

The dimensions of the LRVEs (known in the art as macrozones, previously seen as forging lines, or "fibrage" in French) are several mm long. According to one estimate using an adaptation of mean linear intercept method of the ASTM E112-96 standard, the width of the LRVE was 0.78 mm. According to another estimate using a 2D autocorrelation techniques of the optical contrast, the width of the LRVE was 0.44 mm. (see [ix] Reference attached).

The variations in propagation delay of the acoustic signal caused by material heterogeneities are usually quite small. If the thickness of the object to be inspected varies because of surface roughness, then it will be difficult or impossible to differentiate propagation delay variations caused by heterogeneities from those caused by surface roughness, without an accurate characterization the surface at every point. Therefore, in the present example the two plate parallel surfaces were prepared before the scan. In this example, the two parallel surfaces were machined smooth (i.e., rectified, in the language of machinists) for best results. One way to verify whether the surfaces are smooth enough is to compare the measured variations in time delay to those that would be expected from the thickness variations caused by the surface roughness. If the delays caused by surface roughness are much less than the delay caused by the heterogeneities of interest, than the surface is smooth enough.

The experimental geometry followed that which is schematically illustrated in FIG. 4. The transducer emitted an ultrasound pulse towards the surface in a manner such that the focal point is on the surface of the part to be inspected. This produces an ultrasound source of the required small dimensions in the plate. The alignment procedures to do so are well known to those skilled in the art of ultrasonic measurements. The transducer is used in the pulse-echo configuration, so the same transducer is used both as the source of ultrasound and as the detector. Some of the ultrasound is reflected from the front surface at the water-metal interface, and is detected by the focused transducer. This signal is referred to as the front surface echo.

The ultrasound entering the sample at the source travels through the thickness of the sample and is reflected by the back wall surface. Some of the ultrasound reflected at the water-metal interface on the back wall, is propagated back to the source (the focal point of the transducer), and is accordingly detected by the same focused transducer. This signal is called the back-surface echo.

Because of the small dimensions of the focal area, and because of the parallel surface geometry of the object, the back-surface echo will have traveled a path perpendicular to both surfaces and whose length is twice the plate thickness. This path corresponds to the two superimposed rays described above. The time delay between the front surface echo and the back surface echo may be measured using one of the various techniques known to those skilled in the art of ultrasonic measurements.

In the present example, the transducer selected had a center frequency adequate to focus the sound pulse to a small enough dimension. It is also possible to use wideband transducers and later select the best frequency (using electronic or numeric filters) based on the observed dimensions of the material heterogeneities. Also, the LRVE dimensions need not be known *a priori* and the frequency may be adjusted using an iterative procedure, or a trial and error procedure, for example.

This time delay measurement is then made in a plurality of locations by translating the transducer in a plane parallel to the front surface using the arm that supports the transducer or by translating the plate. An intermittent raster scan was performed at discrete measurement intervals. A convenient measurement scheme used was a square grid (Cartesian planar coordinate system). In this example, the spacing between the measurement points is smaller than half the expected size of the LRVEs and preferably smaller than one-quarter of the expected size of the LRVEs, although other sampling strategies are possible.

FIG. 12a schematically illustrates a representation of the variation of time delay along parallel, substantially equally spaced paths between the front and back sides of the plate. Specifically time delays (arising from the group velocity) in microseconds between the front-surface and back-surface echoes are plotted as a function of representative positions. To simplify viewing, gray scale values are assigned to the time delay intervals. Each time delay is plotted as a gray scale level on a 2D graphical representation of the square grid representing the plate. FIG. 12b is an improved 2D representation of FIG. 12a obtained by applying a 2-dimensional high-pass filter with a cross-over spatial frequency equal to 0.05 mm$^{-1}$, and enhancing the contrast. In this picture, the white areas are sudden increases of the time delay caused by artifacts of the measurements and data analysis. The other gray scale variations are caused by the internal structure of the material. In the example an area of 6 cm by 6 cm was covered with 230,400 measurements, and accordingly the square grid pixel size was effectively 0.125 x 0.125 mm$^2$.

The statistical mean dimensions of the LRVEs (in each direction) can be obtained using a variety of methods. For example, the ASTM E112-96 Standard (the contents of which are incorporated herein by reference) test methods for determining average grain size may be adapted to this purpose. Our analysis differs from the ASTM standard in that we are not imaging grains but LRVEs, and the dimensions are not those of grain sizes or grain dimensions but the dimensions of the LRVEs. Another difference is that the image is not a representation of a plane inside the material but rather a projection through some volume. While this is a considerable difference in that the ASTM standard considers only surface information, and the present representation constitutes a number of grains passing through the sample, the 2-D representations are similar.

In situations where the thickness of the paths are not uniform, or the paths are not parallel, or uniformly spaced, various techniques for transforming the image to a regular representational space can be performed, or the measurements can be fit to a model that accounts for these variations.

Using the above methods in the present invention requires decisions of boundaries and intercepts, as they use transitions from one shade of gray to another (or one color to another) as a statistical correlate of a LRVE boundary. These decisions are subject to interpretation and may include various criteria for determining if the transition is large enough to define it as a boundary between two different LRVEs of relatively uniform grain scale.

The procedures described in the ASTM standard include the Comparison Procedure, the Planimetric Procedure, and the Intercept Procedure. Those skilled in the art of using the ASTM E112-96 Standard should find it easy to adapt these procedures to gray (or color) scale images as described above and estimate the dimensions of the LRVEs. As a simple illustration, FIG 12c adds two white cursors to FIG 12b and the high-pass filtered time delays are plotted against position along the vertical cursor on the graph to the right and against position along the horizontal cursor on the graph at the bottom. If we now count the number of substantial changes in time delay along each cursor, on a best rendering of this image approximately 54 substantial changes in amplitudes were counted along the horizontal axis and 7 substantial changes in amplitude along the vertical axis. Therefore, the LRVEs have dimensions of approximately 60 mm / 54 = 1.1 mm in the horizontal direction and 8.6 mm in the vertical direction. Naturally an average of several such measurements would be preferred to reduce an error of the measurement.

A less subjective method of characterizing of the dimensions of the LRVEs is to calculate the 2-dimensional spatial autocorrelation of the image. This is shown in FIG 12d. The autocorrelation is normalized to a value of 1 at its maximum. The top left graph is the 2D autocorrelation where the result of the autocorrelation is coded as a gray scale. The bottom graph is a horizontal slice at y = 0 and the right graph is a vertical slice at x = 0. A measure of the dimensions can be chosen as the half-width at half maximum. This gives a dimension of 0.362 mm along the horizontal direction and 4.0 mm along the vertical direction. Clearly, the LRVEs have an aspect ratio of about 11. It will also be appreciated that the autocorrelation reveals some repeated pattern having of periodicity of about 2.5 mm in the horizontal direction.

Another ultrasonic quantity that varies in dependence on the path followed is the phase. A resulting 2-dimensional representation of phase shift is shown in FIG. 12e. To produce this image, the step of measuring the phase is followed by a step of correcting for phase jumps of multiples of $2\pi$, followed by a step of converting this phase to a time delay in $\mu$s, and followed by a step of high-pass filtering. A resulting 2-dimensional representation is shown in FIG. 12e. By applying a 2-dimensional spatial autocorrelation to the image and measuring the half-width at half-maximum of the center peak, one obtains the following estimates of the dimensions of the LRVE: 0.442 mm horizontally by 5.25 mm vertically.

Yet another ultrasonic quantity that varies in dependence on the path followed is the amplitude of the signal transmitted through the paths. A 2-dimensional representation of the amplitude is shown in FIG. 12f. By applying a 2-dimensional spatial autocorrelation to the image and measuring the half-width at half-maximum of the center peak, one obtains the following estimates of the dimensions of the LRVE: 0.65 mm horizontally by 8.45 mm vertically.

It should be noted that there may be a systematic difference between the measured LRVE dimensions obtained from different methods of analysis as shown above as well as between these methods and the true dimensions. Consequently the measures provided are relative. As such, the difference between determined mean dimensions of the LRVEs indicate substantially proportional differences in the mean sizes of the LRVEs, but a more exact characterization would require determination of the true mean dimensions by some other way, that has a lower error of measurement. If one can obtain the true dimensions of the LRVEs, an empirical relationship can be determined to relate the measured and true dimensions.

Finally, as a last step, it is noted that the obtained dimensions are all substantially larger than the width of the ultrasound source at the plate surface, dimension that was calculated to be 0.19 mm at the beginning of this example.

FIG. 13 is an image of the surface of the titanium plate obtained by polishing and macroetching to reveal macrozones (a term for LRVEs in titanium alloys). The image has a 6x6 cm$^2$ area. Macroetching involves pickling the surface in acid until etching reveals macroscopic patterns. In this case, macroetching is used to display the macrozones, also called "forging fibres" or "flow lines". In near-alpha titanium alloys, the etched surface is dull and displays a macrostructure revealed by alternating regions of various grey densities. These grey regions are parallel in billets and they show the material flow in forged parts.

Two methods were employed to measure the dimensions of the macrozones. In the first method, we define a macrozone as a surface area of uniform grey level. For a start, the mean linear intercept method used to measure the size of grains was employed to measure the width of these macrozone, a method similar to the ASTM E112-83 Standard Test Methods for Determining Average Grain Size [x]. The number of grey level changes in the direction perpendicular to the flow lines was quantified. It is interesting to note that in the mean linear intercept method, it is the number of grain boundaries that is counted and the border between the grain boundaries is often well defined. On the other hand, the borders for titanium macro-regions are not very well defined and the mean linear intercept method is severely limited by the observer's ability to estimate a zone with a uniform color (grey density). In our case, each macro-region has a subtle, slightly different, shade of grey on a continuous grey scale. Therefore, it is often difficult to determine a border between two macro-regions and it is difficult to automate the technique.

The statistical variability of the measurement was quantified for eight (8) sample regions and five (5) different observers. The observers were asked to quantify the perceived variation of the grey levels in several samples. That enabled us to estimate an average value and a standard deviation of the mean dimension of macro-regions. It was found that the apparent dimensions of the macrostructures are 0.78 mm wide by several mm long. If the macrozones are assumed to be cylinders oriented parallel to the surface, it is known to those skilled in the art that the apparent diameter of these cylinders on a surface is not the true diameter because the surface can cut the cylinders at random locations. It is also known that a correction factor of 1.27 must be applied to the metallographic measurement to obtain the true diameter of the macrozones. Therefore, the true diameter of the macrozones is on the order of 1.0 mm. This agrees well with the value obtained in Example 1 using the similar mean linear intercept method on the delay fluctuations.

A 2-dimensional spatial autocorrelation was also applied to the data represented in FIG. 13. It was found that the half width at half maximum of the correlation was 0.44 mm in the macrozone width direction. This again agrees with the values obtained in Example 1 using autocorrelation methods on measurements of delays or amplitude. This example also shows that to obtain a true measurement of the true mean dimensions of the macrozones is not an easy task and it is method-dependent. This example is illustrated in more details in reference [ix].

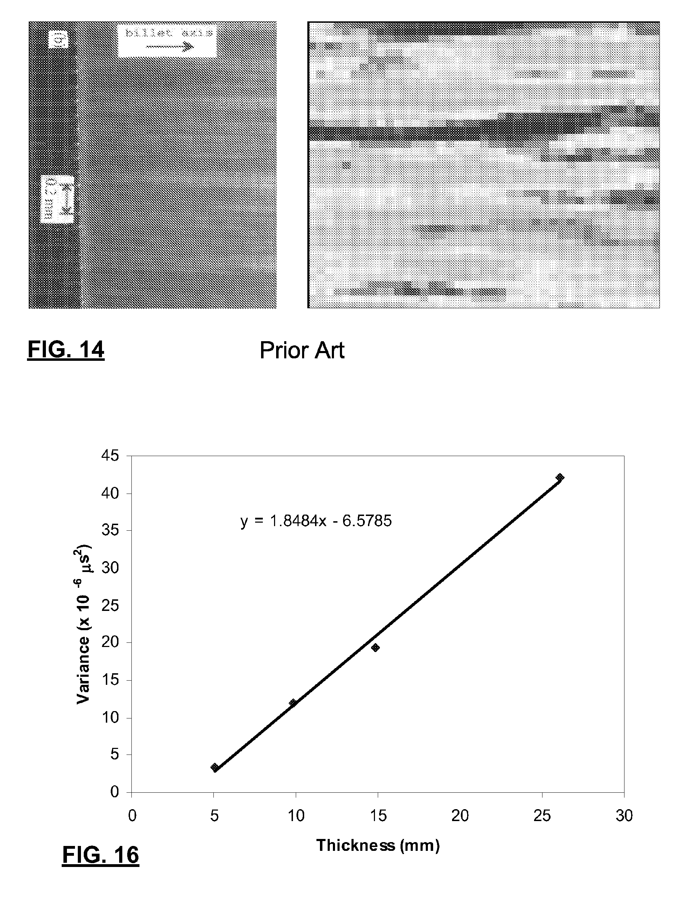

To illustrate the importance of measuring only ultrasound confined to a path that is narrower than the characterized LRVEs, we now compare our measurements with those of Reference [ii]. FIG. 14 is extracted from the Reference [ii]. In this reference, a 5 MHz transducer with F/D ratio of 8 was focused on the distal side of a 1.3 inch thick (33 mm) plate sample in a manner shown schematically in FIG. 3. At the focal point of such a transducer, the beam diameter, is 2.4 mm. At the proximal surface, the diameter of the ultrasound source 22 is 16.4 mm, at least one order of magnitude greater than the dimensions of the LRVEs shown in the photograph. FIG. 14 (left image) shows irregular shapes of patches of different amplitudes, the patches having widths (vertical dimension) on the order of 1 mm or less. Therefore, the experimental arrangement does not allow to define a ray or a path of lateral dimension smaller than the width of the macrozone (or LRVE).

The ultrasonic C-scan image (FIG. 14, right image), does show horizontal bands but these appear to be much wider than those observed in the photograph. In relation to this experiment the authors state that "the pattern of high and low back-surface amplitudes often resembles the physical structure of the columnar macrograins". They do state that the C-scan image of FIG. 14 has dimensions of 1 inch by 1 inch, which allows us to estimate that the amplitude variation observed has a characteristic width of about 5 mm, i.e. approximately half the mean ultrasound beam width (half of 9.4 mm). It is important to note that if substantially all LRVEs are smaller than the width of the path, the patches produced will be essentially artifacts of the beam width and will have an autocorrelation size measurement that is proportional to the beam width, in the neighbourhood of half the beam width. As such this may be an indicator that the measurement is picking up noise.

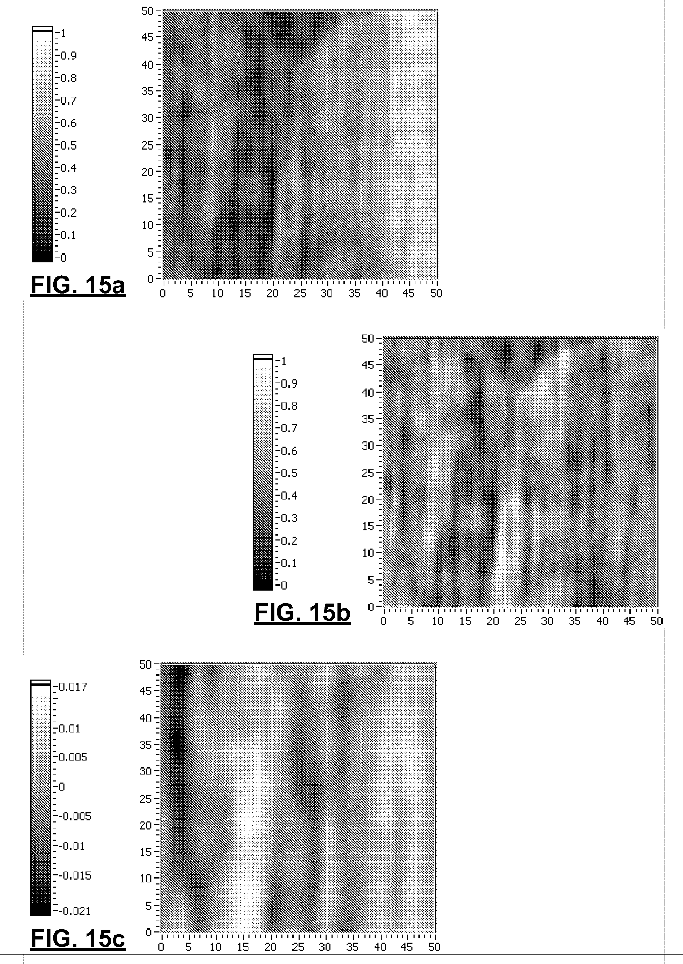

Applicant has reproduced the experimental conditions and measurements following the method of Reference [ii], with the exception that we used the 1 inch thick plate used in Examples 1 and 2. The image resulting from the experiment is shown in FIG. 15a, which is an amplitude plot. The area imaged covers an area of 5 cm by 5 cm. The size of the regions identified in FIG. 15a are much larger than the macrozones shown in all of FIGs. 12 (measured according to the invention), and FIG. 13 (measured at the surface).

While FIG. 15a shows a raw image. Data processing techniques were applied to attempt to improve the quality of the images, and autocorrelations were performed on the enhanced images, in the same manner as was performed for Example 1. Such filtering and enhancement was not suggested by or used by Reference [ii]. Specifically the image is enhanced by use of a high-pass filter with a cross-over spatial frequency equal to 0.02 mm$^{-1}$. The filtered amplitude plot is shown in FIG. 15b. A measured half-width at half maximum of the 2-dimensional autocorrelation are 1.53 mm (FWHM of 3.05 mm) in the horizontal direction and, 8.25 mm (FWHM 16.5 mm) in the vertical direction. These results again do not conform with the measured values of the macrozones determined above.

FIG. 15c shows a mapping of variation in propagation delay (this was not done in Reference [ii]). FIG. 15c too was enhanced by use of a high-pass filter with a cross-over spatial frequency equal to 0.02 mm$^{-1}$. The measured half-width at half maximum of the 2-dimensional autocorrelation is 2.62 mm (FWHM 5.25 mm) in the horizontal direction and 16.5 mm (FWHM 33 mm) in the vertical direction. The full width in the horizontal direction is 5.25 mm, a value intermediate to the calculated minimum and maximum beam diameters. However none of the other values are consistent with the measurements taken with the beams constrained to paths narrower than the mean dimensions of the macrozones (e.g. those of FIG. 12, which are substantially in agreement with each other and the surface estimations of macrozone size of FIG. 13).

This confirms that the apparatus of [ii] could not, in principle, have yielded a useful characterization of the macrozones of the sample used, and it is only by blurred statistical correlations that the general orientation (not the size) of the macrozones is preserved. Even when the obtained image is enhanced, the estimated dimensions of the LRVEs are significantly different from the those obtained in Example 1 using similar methods but a small ultrasound source and a small ultrasound detector, from that obtained in Example 2 using metallographic techniques, and from that obtained Example 4 (see below) using yet another variation of the present invention.

Above a model is presented for macrozone characterization in the third dimension (i.e. in the direction of the ultrasound rays). In Example 1, this corresponds to the direction normal to the plate surface. The plate of Example 1 was machined to several predetermined thicknesses. The propagation delay was measured for each step in the same manner as for Example 1.

FIG. 16 plots measured variance of the propagation delay as a function of plate thickness. The straight line is a linear least squares fit through the data points. The slope obtained experimentally, m, satisfies:

$$m = (4.867 \times 10^{-3})^2 d = 1.8484 \times 10^{-6}.$$

Therefore, the characteristic dimension in the direction of propagation is found to be $d$ = 0.38 mm. This results validates the approximation $l >> d$, even for the thinnest (5 mm) sample. As we shall see below, this estimate of $d$ is reasonable.

The characteristic dimension, $d$, is related to the size of the macrozones. It is not, however, equal to their average diameter. The characteristic dimension was defined earlier through the relation $n = l/d$ which is equalent to $d = l/n$. The quantity $d$ is the mean free propagation distance of the ultrasound between two macrozone boundaries. Because the ultrasonic path does not necessarily go through the center of each macrozone, $d$ is smaller than the mean macrozone diameter.

Metallurgists are familiar with this concept. When they image the microstructure of a metal using standard optical techniques, they obtain an image of a single plane. The mean grain size as measured by the mean linear intercept method, for example, provides an estimate of grain size that is smaller than the mean grain diameter because the plane intersects some grains in their center and other grains near one of their edges. The known relationship between the mean linear intercept and the mean diameter $D_c$ of grains, (in this case, of cylindrical macrozones) is given by: $D_c = d / 0.785$ (see [xi]).

In the example, the macrozones were elongated in a direction parallel to the surface. Therefore, this model applies and the estimated diameter of the macrozones, in the thickness direction of the plate is 0.38/0.785 = 0.48 mm.

Because the macrozones are expected to be roughly cylindrical, this measurement should be comparable to the measurements of the macrozone width obtained in Example 1. The measurement is indeed comparable. This validates this example and affirms that this can at least be used as a relative measure of the mean size of the macrozones in the direction of the propagating ultrasound along the path.

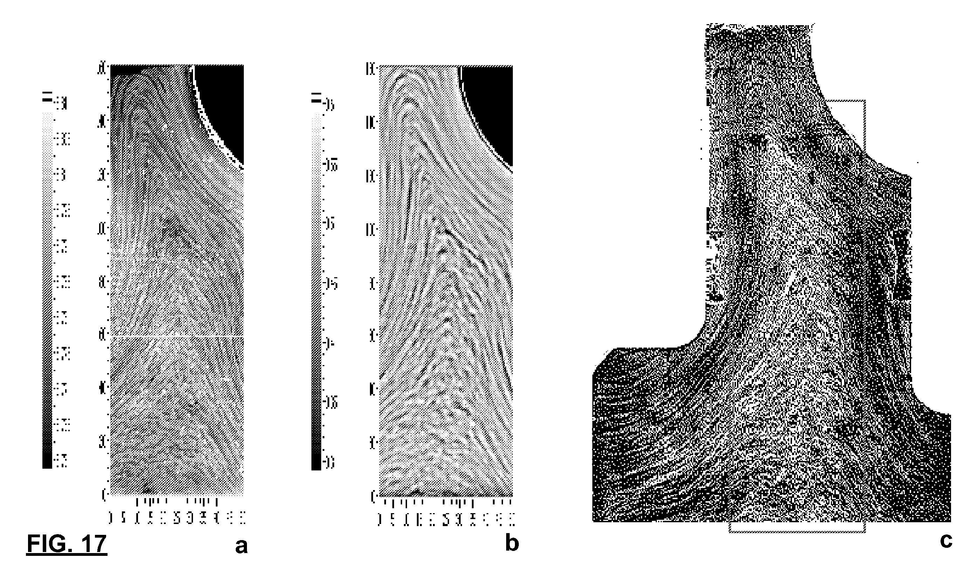

The technique described in Example 1 can also be applied to plates of titanium alloy IMI 834 that are cut from forging parts that have a complex shape. FIG. 17a shows a 2-dimensional mapping of the propagation delay. FIG. 17b shows a 2-dimensional mapping of the back echo amplitude. For comparison FIG. 17c shows the metallographic examination revealing the "fiber texture", "forging lines", or "deformed macrozones" inside the part (these terms taken to be synonymous). FIGs. 17a,b illustrate much more clearly these curvilinear structures than FIG. 17c.

The dimensions of the macrozones can be estimated by comparing different regions of FIGs. 17a or 17b. Clearly, in the top of the images, these are long and narrow, approximately 1 by several mm. In the center bottom of the images, they have approximately the same width but an aspect ratio close to 1, being a bit wider than taller.

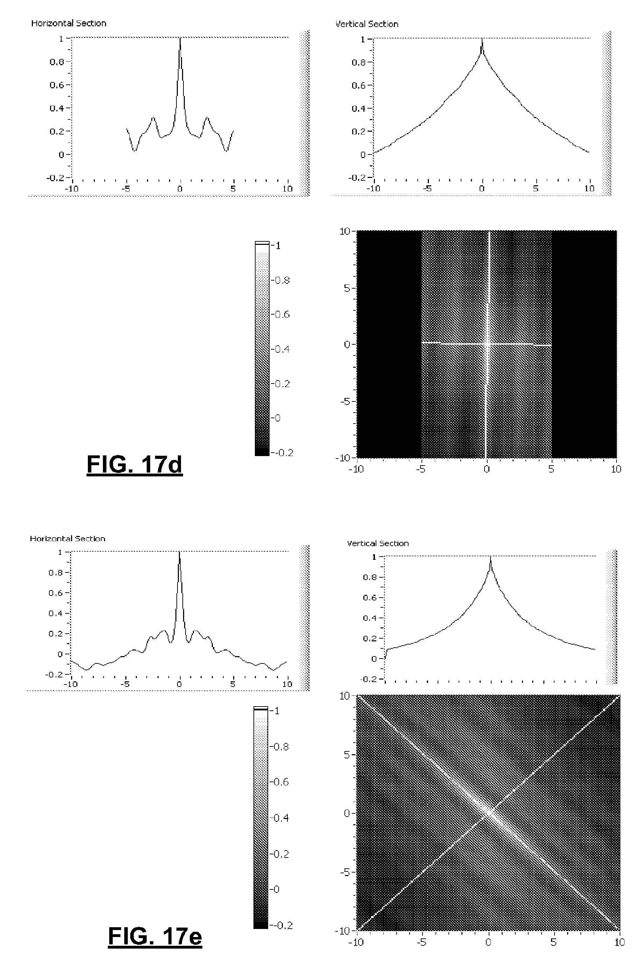

For a better quantitative analysis, autocorrelations can be made on portions of the image. FIG. 17d shows the autocorrelation of the region between 0 and 10 mm horizontally and 100 and 120 mm vertically. The center peak is inclined by about 1 degree from the vertical. The half width at half maximum of the autocorrelation, i.e. the characteristic dimensions of the macrozones, is 3.05 mm in the long direction and 0.32 mm in the narrow direction. FIG. 17d also shows that the macrozones are quasi-periodic with a periodicity of about 2.5 mm.

FIG. 17e shows the autocorrelation of the region between 30 and 50 mm horizontally and 100 and 120 mm vertically. The center peak is inclined by about 45 degrees from the vertical. The half width at half maximum of the autocorrelation, i.e. the characteristic dimensions of the macrozones, is 2.1 mm in the long direction and 0.28 mm in the narrow direction. FIG. 17e does not show a quasi-periodic structure.

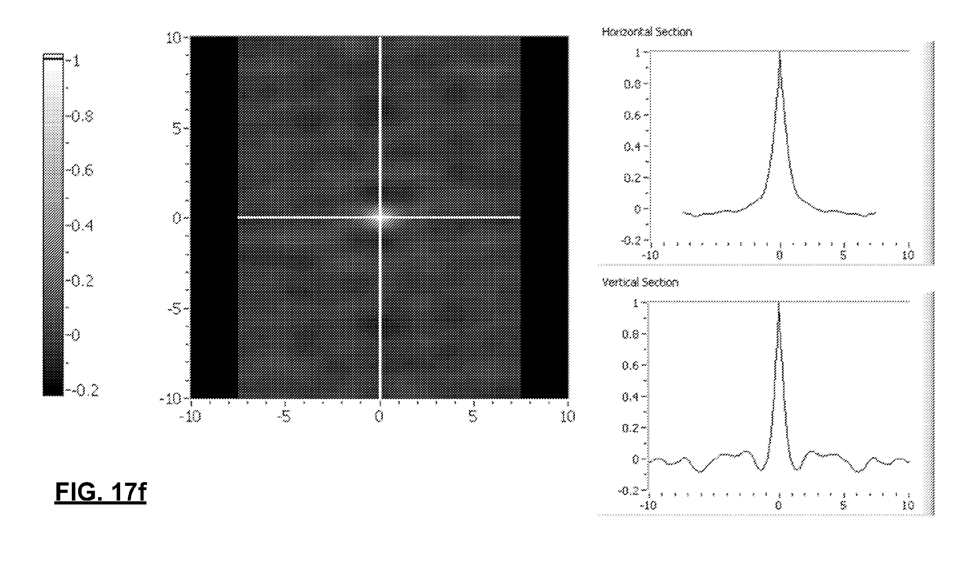

FIG. 17f shows the autocorrelation of the region between 15 and 30 mm horizontally and 0 and 30 mm vertically. The center peak is approximately horizontal. The half width at half maximum of the autocorrelation, i.e. the characteristic dimensions of the macrozones, is 0.45 mm in the long direction and 0.31 mm in the narrow direction, for an aspect ratio a little larger than 1, as obtained using the visual inspection method above. FIG. 17f does not show a quasi-periodic structure. Cleary, a similar analysis could have been made on the 2-dimensional mappings of the echo amplitudes of FIG. 17b.

The complexity shown in FIGs. 17a,b is believed to be representative of the metallurgical structures observed in FIG. 17c, but with one difference. FIGs. 17a,b are representative of the structures averaged throughout the thickness of the plate while FIG. 17c shows the structures at the surface. It is interesting to note that within a single part, there can be widely different regions. The estimated dimensions of the macrozones may be compared from one region to the next, either by inspection or by precise calculation. The center region of the three images shows that the structures are much shorter and more disorganized in the center of the part. This is interpreted as a region of recrystallization where the macrostructures are broken. The same conclusion can be arrived at by inspection of any one of the three images of FIG. 17a-c, i.e. by inspection of the shape, dimensions, and orientation of the macrozones.

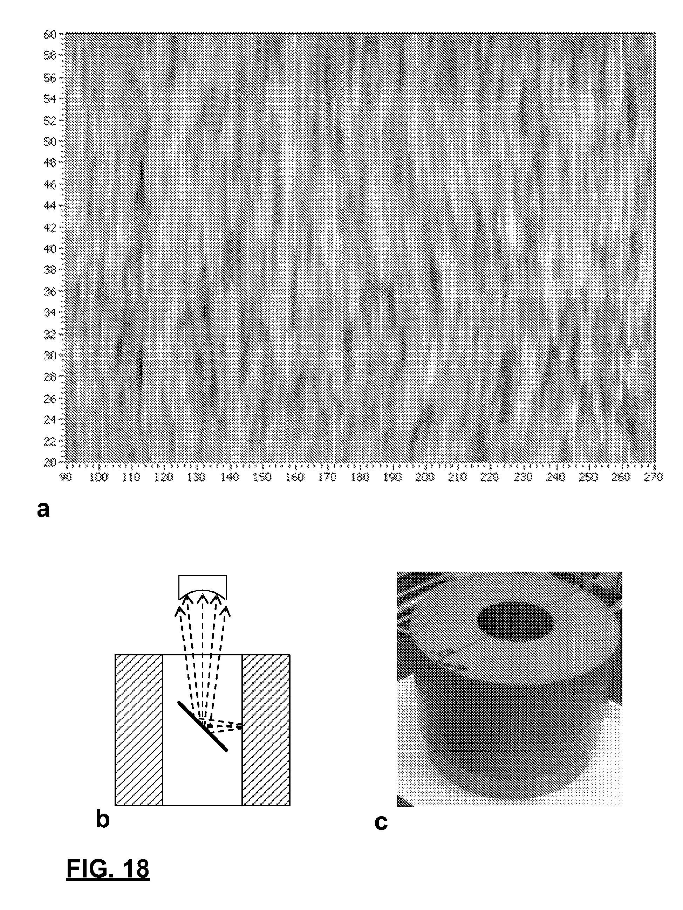

The technique described in Example 1 was applied to a cylinder cut from a forged part of titanium alloy IMI 834. The cylinder is shown in FIG. 18c. FIG. 18b schematically illustrates the experimental setup, in which the transducer is focused on the inside surface of the cylinder. Because of the limited space, the focused transducer used for both ultrasound generation and ultrasound detection was aligned on the axis of the cylindrical hole and an acoustic mirror was used to reflect the acoustic beam onto the part's inner surface. The transducer and mirror assembly was scanned vertically while the cylinder was rotated. A portion of the scan with dimensions of 40 mm vertically by 180 degrees of rotation is shown in FIG. 18a.

The LRVEs imaged are seen to be elongated vertically by several mm, and with a width of a few degrees, as can be seen by comparing the size of the structures to the scales. The width in degrees could be converted to a dimension in mm by use of the diameter of the cylinder. It is also seen that in the area centered on 30 mm of height and 250 degrees of rotation, the alignment of the LRVEs deviates somewhat from the vertical direction.

This example illustrates that the technique can be easily adapted to cylindrical parts and that estimates of shapes, orientation, and dimensions need not be made by sophisticated mathematical method. It also shows that LRVE dimensions can be measured in any system of coordinates. The best choice of system of coordinate system depends on many factors such as the shape of the part, the expected shape of the LRVEs and their symmetrical arrangement, and the scanning mechanism.

In this example, the width expressed in degrees would be appropriate if the LRVEs are wider further away from the center, but it may not be the most useful estimate if the LRVEs have constant width in linear dimensions.

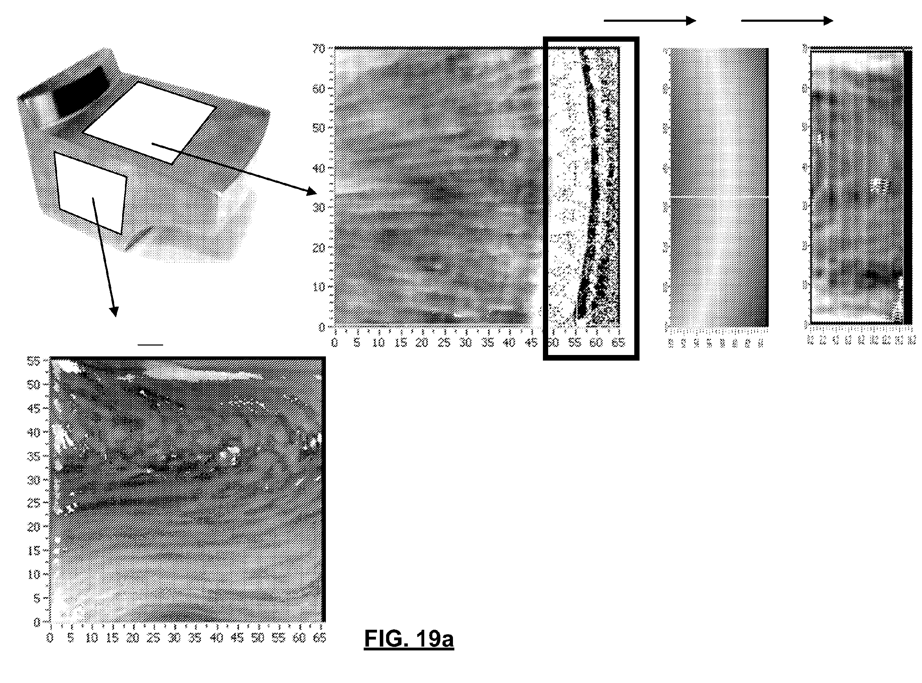

The technique described in Example 1 was applied to a forged block of titanium alloy IMI 834 shown in the upper left of FIG. 19a. The white square areas shown on the block are the approximate locations of two 2-dimensional scans made on the part. The two arrows indicate the corresponding two images obtained from a mapping of the propagation delays. The scales on the mappings indicate position on the surface in units of mm. The observed structures evident in both mappings are interpreted as flow lines or macrostructures. This shows that the technique can be extended to thick blocks, as opposed to plates.

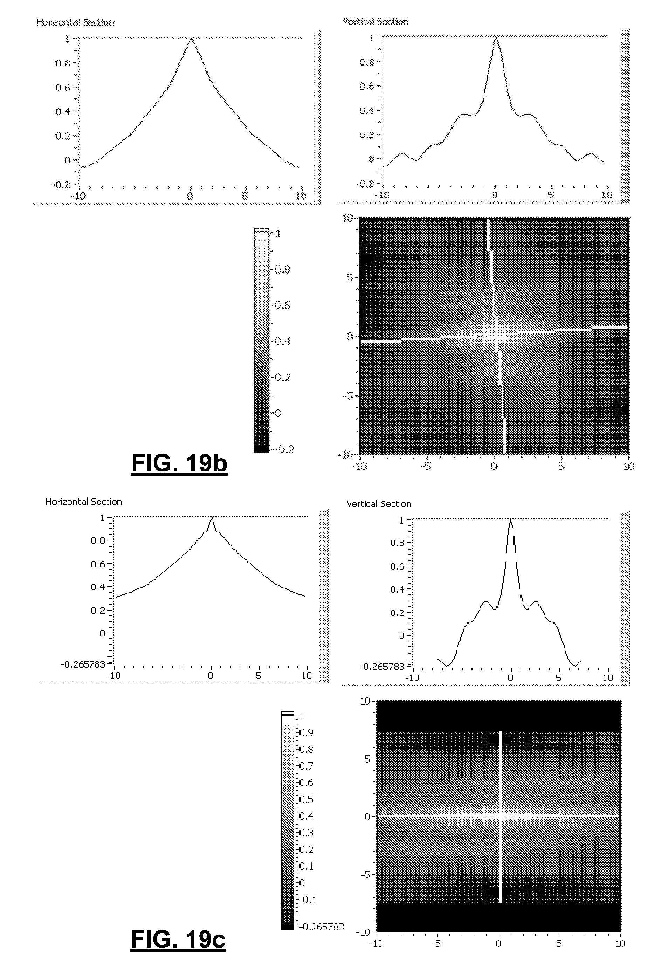

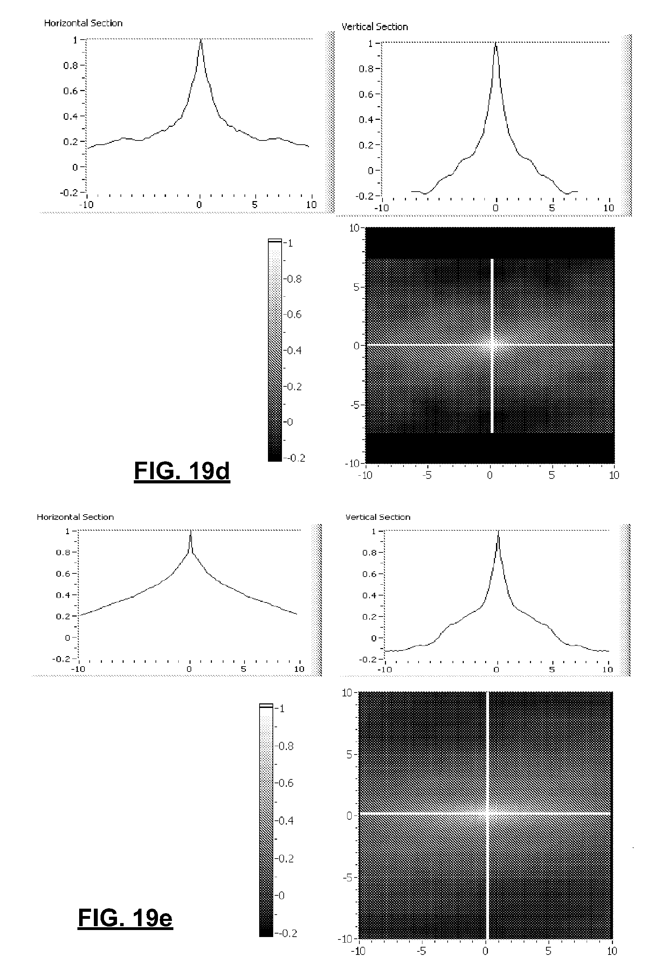

In the case of the mapping on the top surface, the situation is similar to that described in FIG. 11, where there are two response echoes detected. To the right of the mapping taken from the top surface, at radial positions of 50 to 65 mm, the technique seems to not work. When the measurement is made between the two parallel top and bottom surfaces, the echo from the inclined (rounded in FIG. 19) edge can easily be rejected by gating the back surface echo. However, when the source is located above the rounded surface, the only remaining echo comes from this rounded surface.

In FIG. 19a, the region surrounded by a black rectangle was analyzed using the echo from the round surface. The gray-scale coded delay is shown to the immediate right. The large variations observed are caused by the rapid change in propagation distance caused by the geometry. This image is then high-pass filtered spatially by applying a 2-dimensional Soble filter. The result is the right-most mapping. Structures extending nearly radially are observed.

At this point, it must be pointed out that the paths are not normal to the surface but go from the ultrasound source to a point on the curved surface which has the following property: the normal to the surface at that point intersect the ultrasound source. Therefore, complex but calculable distortions are introduced in the image. This is an example of a non-Cartesian mapping. Although the part was irregularly shaped, its surface was smooth. Therefore, the observed structures are not caused by rapid variations of the propagation distance, but by rapid variations of the sound velocity from one ultrasound ray to another.

The dimensions of the macrozones along the radial direction should be the same whether measured from the top of the side of the part. However, the side scan shows that the radial dimensions are longer near the bottom of the part and shorter near the top. Because the measurement from the top surface is an average along the entire thickness, the radial dimension along the radial surface should be an average of that observed on the entire side scan (and of that which lies above and below the side scan).

FIG. 19b shows that, for the top scan, in the region of radial dimensions ranging from 20 to 40 mm and vertical dimension ranging from 25 to 45 mm, the half width at half maximum along the radial direction is 2.87 mm. FIG. 19c shows that, for the side scan, in the region of radial dimensions ranging from 25 to 45 mm and vertical dimension ranging from 5 to 20 mm of FIG. 19a (note that the origins of the x scales for the top and side scans are not the same), the half width at half maximum along the radial direction is 5.4 mm. Accordingly the macrozones are much longer. FIG. 19d shows that, for the side scan, in the region of radial dimensions ranging from 25 to 45 mm and vertical dimension ranging from 30 to 45 mm of FIG. 19a, the half width at half maximum along the radial direction is 1.17 mm. Accordingly the macrozones are much shorter. Finally, FIG. 19e shows that, for the side scan, in the region of radial dimensions ranging from 25 to 45 mm and vertical dimension ranging from 0 to 50 mm of FIG. 19a, the half width at half maximum along the radial direction is 2.92 mm. Accordingly, the macrozones length in the radial direction averaged over most of the thickness is intermediate that observed in FIG. 19c and FIG. 19d, and it is close to that observed in FIG. 19a (2.87 mm).

A method and apparatus have been provided for characterizing LRVEs, and specifically macrozones of titanium alloys using differential ultrasonic propagation properties of the different macrozones. Unexpectedly, statistical mean diameters can be derived from large sample sets in spite of the interference and disruptive effects of the macrozones.

Other advantages that are inherent to the structure are obvious to one skilled in the art. The embodiments are described herein illustratively and are not meant to limit the scope of the invention as claimed. Variations of the foregoing embodiments will be evident to a person of ordinary skill and are intended by the inventor to be encompassed by the following claims.

*References:*

[i] A. P. Woodfield, M. D. Gorman, R. R. Corderman, J. A. Sutliff, and B. Yamrom. "Effect of microstructure on dwell fatigue behavior of Ti-6242" Titanium '95: Science and Technology. 1116-1123 (1995).

[ii] F.J. Margetan, M. Gigliotti, L. Brashe, and W. Leach. "Fundamental Studies: Inspection Properties for Engine Titanium Alloys" U.S. Department of Transportation & Federal Aviation Administration Report DOT/FAA/AR-02/114, December 2002.

[iii] L. Yu, Y Guo, F. J. Margetan, and R. B. Thompson. "Effect of microstructure on backwall signal attenuation measurement using focused transducers" Review of Quantitative Nondestructive Evaluation Vol. 20B. Edited by D. O Thompson and D. E. Chimenti. Melville NY, AIP Conference proceedings 557, 2001. p. 1330-1345.

[iv] P.D. Panetta, F.J. Margetan, I. Yalda, and R.B. Thompson, "Ultrasonic Attenuation Measurements in Jet-Engine Titanium Alloys," in Review of Progress in QNDE, Vol. 15B, D.O. Thompson and D.E. Chimenti, eds., Plenum, New York, 1996, p. 1735.

[v] P.D. Panetta, F.J. Margetan, I. Yalda, and R.B. Thompson, "Observation and Interpretation of Microstructurally Induced Fluctuations of Back-Surface Signals and Ultrasonic Attenuation in Titanium Alloys," ibid., Vol. 16B, 1997, p. 1547.

[vi] M. P. Blodgett and D. Eylon. "The Influence of Texture and Phase Distortion on Ultrasonic Attenuation in Ti-6AI-4V" J. of Nondestructive Evaluation, Vol. 20, No. 1, 2001. p. 1-16.

[vii] H.-J. Bunge. « Texture Analysis in Materials Science » Butterworths, Berlin, 1982.

[viii] "Introduction to Phased Array Ultrasonic Technology Applications : R/D Tech Guideline", Advanced Practical NDT Series. Québec, R/D Tech inc., 2004.

[ix] L. Toubal, P. Bocher, A. Moreau, and D. Lévesque "Macro-regions size measurements in bimodal titanium forgings using 2D autocorrelation method" attached. To be submitted to Materials Characterization, once this patent application is deposited.

[x] Standard Test Methods for Determining Average Grain Size. ASTM E112-83; 1983, p. 1073-1107.

[xi] Lotfi Toubal and André Moreau. "Comparaison des largeurs de lignes de forge mesurées par métallographie et ultrasons" Industrial Materials Institute, #IMI 2007-116819-C, 2007, 9 pages. To be submitted for publication.

[xii] L. Toubal, P. Bocher, and A. Moreau. "Dwell fatigue life and ultrasonic measurement" To be submitted to Proceedings of the 12th International Conference on Fracture, Ottawa ON, 12-17 July 2009.

**Claims**

1.  A method for characterizing locally representative volume elements (LRVE) within an object where the LRVEs are of an expected range of sizes much smaller than the dimensions of the object comprising:

    selecting an ultrasonic emitter capable of generating in the object at least one frequency component having a wavelength less than or approximately equal to an expected dimension of the LRVEs;
    generating the frequency component in the object and detecting the frequency component after it traverses each of a plurality of different paths through the object, where each of the plurality of paths has a transverse dimension smaller than the expected dimension of the LRVEs, and wherein a mean separation of adjacent paths is smaller than or approximately equal to the expected dimension of the LRVEs; and

computing a statistically representative mean dimension of the LRVEs using a difference in time, amplitude and/or phase of the detected frequency components traveling the different paths.

2. The method of claim 1 wherein the plurality of different paths are substantially piece-wise linear with no substantial redirection at interfaces between LRVEs.

3. The method of any of claims 1 and 2 wherein the wavelength of the at least one frequency component, the transverse dimension of the paths, and the mean separation of the adjacent paths are smaller than half the expected dimension of the LRVEs.

4. The method of any of claims 1 to 3 wherein computing the statistically representative mean dimension of the LRVEs comprises computing a mean intercept, or performing shape analysis on a map of the time, amplitude or phase values, or computing a frequency transform or an autocorrelation, of a set of the time, amplitude or phase values, or comparing with a reference map.

5. The method of any of claims 1 to 4 wherein one of the generating and the detecting of the frequency component for a given path is performed on an area or a volume of the object that is less than or approximately equal to the expected dimensions of the LRVEs, for example, by generating the frequency component at a area or volume of the object that is small compared to the expected dimensions of the LRVEs, and detecting the frequency component for the given path is performed by detecting a plane wave, or vice versa, or by generating the frequency component for each path at the area or volume of the object that is small compared to the expected dimensions of the LRVEs and detecting the frequency component at a same or different area or volume of like dimensions.

6. The method of any of claims 1 to 5 wherein selecting the ultrasonic emitter comprises:

selecting an ultrasonic transducer that both generates and detects the frequency component, such as a focused immersion transducer;
selecting a laser radiation pulse for generating the frequency component;
selecting a laser interferometer for detecting the frequency component; or
selecting a phased array transducer as either the emitter or detector.

7. The method of any of claims 1 to 6 wherein generating and detecting the frequency component for each of the plurality of different paths comprises generating and detecting at regular intervals while moving one or more of: the ultrasound emitter, the ultrasound detector, the object, and an ultrasound reflector.

8. The method of any of claims 1 to 7 wherein computing the statistically representative mean dimension of the LRVEs comprises computing a mean dimension of the LRVEs in the direction of propagation of the path.

9. The method of any of claims 1 to 8 wherein using the difference in time, amplitude and/or phase of the detected frequency components traveling the different paths to characterize a statistically representative mean dimension of the LRVEs comprises computing a mean dimension of the LRVEs in a direction orthogonal to the path.

10. The method of any of claims 1 to 9 wherein using the difference in time, amplitude and/or phase of the detected frequency components traveling the different paths to characterize a statistically representative mean dimension of the LRVEs comprises quantifying one or more of: a measured propagation delay; a measured signal amplitude; a computed velocity of the frequency component; and a computed attenuation.

11. The method of claim 10 wherein characterizing the statistically representative mean dimension of the LRVEs comprises computing spatial variations of the one or more quantities by use of a 2-dimensional representation of the paths, for example by computing a 2-dimensional autocorrelation distance for the representation or by counting a number of grey scale changes in the 2-dimensional representation in a manner consistent with methods used in metallurgy.

12. The method of claim 11 further comprising applying image enhancing processing methods to remove unwanted noise, artifacts, or spatial distortions, or to highlight specific features in the 2-dimensional representation.

13. An apparatus comprising:

a processor for using a difference in time, amplitude and/or phase of detected frequency components of ultrasonic signals traveling different paths through an object having heterogeneities **characterized by** locally representative volume elements (LRVEs), to compute a statistically representative mean dimension of the LRVEs, wherein each of the plurality of different paths through the object is substantially piece-wise linear, with no substantial redirection at interfaces between LRVEs, and has a transverse dimension smaller than or approximately equal to the expected dimension of the LRVEs, and the detected frequency components have a wavelength that is smaller than or approximately equal to the expected dimension of the LRVEs.

**14.** The apparatus of claim 13 further comprising an ultrasonic emitter and detector for generating and detecting the ultrasonic signals through the paths.

**FIG. 1**

**FIG. 2**

**FIG. 3**

**FIG. 4**

**FIG. 5**

**FIG. 6**

**FIG. 8**

**FIG. 9**

**FIG. 7**

**FIG. 10**

**FIG. 11a**

**FIG. 11b**

**FIG. 12a**

**FIG. 12b**

**FIG. 12c**

Save Picture

Display parameters

Normal

y-axis Autoscale ON    Linear Amplitude

y min : 35    Normalize OFF

y max : 60    Gray scale

x-axis Autoscale ON    Ampl. Autoscale OFF

x min : 20    z min : -0.08

x max : 60    z max : 0.08

**FIG. 12d**

**FIG. 12e**

FIG. 12f

FIG. 13

**FIG. 14**        Prior Art

$$y = 1.8484x - 6.5785$$

**FIG. 16**

FIG. 15a

FIG. 15b

FIG. 15c

FIG. 17

**FIG. 17d**

**FIG. 17e**

**FIG. 17f**

a

b

c

FIG. 18

FIG. 19a

**FIG. 19b**

**FIG. 19c**

Horizontal Section

Vertical Section

**FIG. 19d**

Horizontal Section

Vertical Section

**FIG. 19e**

34

Europäisches
Patentamt
European
Patent Office
Office européen
des brevets

# EUROPEAN SEARCH REPORT

Application Number

EP 09 17 4236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 5 631 424 A (NIETERS EDWARD J [US] ET AL) 20 May 1997 (1997-05-20) * the whole document * | 1-14 | INV. G01N29/04 G01N29/22 G01N29/34 |
| A | US 5 048 340 A (THOMPSON R BRUCE [US] ET AL) 17 September 1991 (1991-09-17) * abstract * * column 4, lines 37-50 * * column 6, lines 27-34 * * column 7, lines 1-3 * * column 9, lines 7-18 * | 1-14 | G01N29/44 |
| A | US 6 494 098 B1 (LEYBOVICH ALEXANDER [US]) 17 December 2002 (2002-12-17) * abstract * | 1,13 | |
| A | GB 2 428 476 A (ANDREWS DAVID RICHARD [GB]) 31 January 2007 (2007-01-31) * abstract * * page 1, paragraph 1 * * page 2, paragraph 3 - page 3, paragraph 2 * * page 11, paragraph 5 * | 1,13 | |

TECHNICAL FIELDS
SEARCHED      (IPC)

G01N

The present search report has been drawn up for all claims

| Place of search | Date of completion of the search | Examiner |
|---|---|---|
| Munich | 22 January 2010 | Filipas, Alin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 17 4236

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2010

| Patent document cited in search report | | Publication date | Patent family member(s) | | Publication date |
|---|---|---|---|---|---|
| US 5631424 | A | 20-05-1997 | NONE | | |
| US 5048340 | A | 17-09-1991 | NONE | | |
| US 6494098 | B1 | 17-12-2002 | NONE | | |
| GB 2428476 | A | 31-01-2007 | EP | 1892525 A1 | 27-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5631424 A, Nieters
- US 20070113655 A
- US 4083232 A

### Non-patent literature cited in the description

- **A. P. Woodfield ; M. D. Gorman ; R. R. Corderman ; J. A. Sutliff ; B. Yamrom.** Effect of microstructure on dwell fatigue behavior of Ti-6242. *Titanium '95: Science and Technology,* 1995, 1116-1123
- **F.J. Margetan ; M. Gigliotti ; L. Brashe ; W. Leach.** *Fundamental Studies: Inspection Properties for Engine Titanium Alloys,* December 2002
- Effect of microstructure on backwall signal attenuation measurement using focused transducers. **L. Yu ; Y Guo ; F. J. Margetan ; R. B. Thompson.** Review of Quantitative Nondestructive Evaluation. AIP Conference proceedings, 2001, vol. 20B, 1330-1345
- Ultrasonic Attenuation Measurements in Jet-Engine Titanium Alloys. **P.D. Panetta ; F.J. Margetan ; I. Yalda ; R.B. Thompson.** Review of Progress in QNDE. Plenum, 1996, vol. 15B, 1735
- **P.D. Panetta ; F.J. Margetan ; I. Yalda ; R.B. Thompson.** *Observation and Interpretation of Microstructurally Induced Fluctuations of Back-Surface Signals and Ultrasonic Attenuation in Titanium Alloys,* vol. 16B, 1547
- **M. P. Blodgett ; D. Eylon.** The Influence of Texture and Phase Distortion on Ultrasonic Attenuation in Ti-6AI-4V. *J. of Nondestructive Evaluation,* 2001, vol. 20 (1), 1-16
- **H.-J. Bunge.** *Texture Analysis in Materials Science,* 1982
- Introduction to Phased Array Ultrasonic Technology Applications : R/D Tech Guideline. Advanced Practical NDT Series. R/D Tech inc, 2004
- Macro-regions size measurements in bimodal titanium forgings using 2D autocorrelation method. **L. Toubal ; P. Bocher ; A. Moreau ; D. Lévesque.** Materials Characterization. 1983
- Standard Test Methods for Determining Average Grain Size. ASTM, vol. E112-83, 1073-1107
- **Lotfi Toubal ; André Moreau.** Comparaison des largeurs de lignes de forge mesurées par métallographie et ultrasons. *Industrial Materials Institute,* 2007, vol. 116819-C, 9
- **L. Toubal ; P. Bocher ; A. Moreau.** Dwell fatigue life and ultrasonic measurement. *Proceedings of the 12th International Conference on Fracture,* 12 July 2009